# EUROPEAN PATENT SPECIFICATION

(11) **EP 4 547 954 B1**
(45) Date of publication and mention of the grant of the patent: **04.02.2026**
(21) Application number: 23735338.8
(22) Date of filing: 29.06.2023
(51) Int. Cl.: F03B 13/26, F03B 17/06

(54) **SYSTEM AND METHOD FOR PRODUCING ELECTRICITY FROM A FLUID STREAM IN A BODY OF WATER**
SYSTEM UND VERFAHREN ZUR ERZEUGUNG VON ELEKTRIZITÄT AUS EINEM FLÜSSIGKEITSSTROM IN EINEM GEWÄSSER
SYSTÈME ET PROCÉDÉ DE PRODUCTION D'ÉLECTRICITÉ À PARTIR D'UN FLUX DE FLUIDE DANS UN CORPS D'EAU

(30) Priority: 29.06.2022 EP 22382609
(43) Date of publication of application: 07.05.2025
(73) Proprietor: Relidal, SL, 28003 Madrid (ES)
(72) Inventor: TARAZONA LIZARRAGA, Jaime, 28400 Madrid (ES); CALVO SANTESMASES, Manuel, 28003 Madrid (ES); LÓPEZ-PEÑA FERNÁNDEZ, Álvaro, 28023 Madrid (ES)
(74) Representative: Torner, Juncosa I Associats, SL
(86) International application number: PCT/EP2023/067864
(87) International publication number: WO 2024/003273

(56) References cited:
- WO-A1-2013/043057
- US-A1- 2008 277 492
- US-A1- 2009 127 861
- US-A1- 2016 297 506

## Description

### Technical field

The present invention relates to a power generating system and method. In particular, the present invention relates to a system and to a method for producing electricity from a fluid stream in a body of water.

### State of the Art

Renewable energy sources are becoming more important and necessary as the need for reducing the consumption of fossil energy sources increases, among other reasons. Renewable energy includes sources such as solar, wind, hydropower, bioenergy, tides, waves and geothermal heat. The present invention is particularly related to tidal power or tidal electricity generation, as well as electricity generation from ocean currents.

Gravitational pull of the moon and sun along with the rotation of the earth create tides in oceans, seas, lakes, etc. Said tides can be used for producing electricity. Although not yet widely used, especially compared with solar, wind or hydropower renewable energy sources, tidal energy has a great potential for energy generation. A key advantage is that tides are more predictable than wind and solar, easing its integration in power systems. Another advantage of tidal over other sources of renewable energy is that it is placed on the sea, where space is large and, if placed following strict environmental and social criteria, less spatial constrains, smaller visual impacts and reduced social opposition may exist.

A tidal generator converts the energy of tidal flows into electricity. High tidal current velocities increase the potential for tidal generation.

Ocean currents are a continuous, directed movement of seawater generated by a number of forces acting upon the water. Ocean currents typically have small variations in current speed and stream location with minimal changes in direction, which makes them really advantageous for energy production. Known in the art there are generators positioned in the flow of ocean currents in order to generate electricity from ocean currents. There are two main types of known water turbines suitable for marine power generation:
- turbines with axial flow rotors, having a horizontal axis which is substantially in the same direction of the flow of ocean current.
- turbines with radial flow rotors, which receive the flow of ocean current in a substantially traverse direction to the axis of the rotor.

These known types of turbines can be combined with any of the main known types of supports for water current turbines: floating moored systems, sea-bead mounted systems, and intermediate systems.

The present invention is suitable for producing electricity from ocean currents and/or from tidal flows.

Typically, known tidal power generators include tidal barrages, tidal turbines and tidal fences. The present invention is particularly related to tidal turbines, which make use of the kinetic energy of moving water to power turbines. Tidal turbines are like wind turbines in that they both have blades that turn a rotor to power a generator. Known in the art there are tidal turbines which are placed on the sea floor in locations where there is a strong tidal flow. For example, EP 2425122 A1 and EP 2122160 A1 disclose tidal turbines for being placed on the sea floor.

Also known in the art there are tidal turbines which are placed on floating devices close to the water surface as, typically, tidal flow is stronger closer to the water surface than on the sea floor. For example, EP 1831544 A1, EP 3851665 A1 and WO 2022/106832 A1 disclose tidal turbines placed on floating devices near the water surface. In any case, energy production from tidal turbines placed on the sea floor or on a floating device depend on the velocity of tidal flow on the location where the tidal turbines are placed, which vary from place to place. Typically, tidal turbines are placed on locations having fast tidal currents.

Known in the art there are systems and methods for producing electricity from a fluid stream in a body of water, in particular, which disclose attaching a tidal turbine to the hull of a vessel, such as a ship or a boat.

US 7146918 B2 discloses a system for producing hydrogen comprising a plurality of sail driven vessels floating in water and coupled to each other in a predetermined spaced apart configuration to form a convoy, each of said vessels comprising: at least one sail for capturing wind to move the vessel reciprocally substantially along a predetermined path which is substantially perpendicular to the wind direction; at least one turbine provided below each said vessel so as to be submerged in the water and rotated by water flowing therethrough when the floating vessels are moved relative to the water by the at least one sail; a generator adapted for converting rotation of the at least one turbine into electricity; and an onboard hydrogen production system to produce hydrogen using the electricity generated by the generator.

A problem of the system disclosed by US 7146918 B2 is the large size of the vessel, which is described as being preferably about 250 meters, and its sails, which are described as being about 100 meters. Such large vessel and sails create a remarkable visual impact, as well as disturbance to the marine and aerial ecosystem.

WO 2016/142566 A1 relates to a system for the production of hydrogen from sea water, of the type that comprises a boat fitted with sails for capturing the wind to move the ship; at least one turbine placed under the ship in order to stay submerged in the water and its rotation is caused by water flowing through turbine when the ship moves in the water; an electric generator adapted to convert the rotation of at least one of the turbines into electricity; a system for generating hydrogen from the electric energy generated; and hydrogen storage means.

The sails of the boat disclosed by WO 2016/142566 A1 have a configurable profile between a folded non-operational position, and an unfolded operational position, which determines the sail profile and hence the aerodynamic surface that makes contact with the wind.

A further problem of the system disclosed by US 7146918 B2 is that the sails are difficult to operate, control and regulate. WO 2016/142566 A1 aims to solve this problem. However, WO 2016/142566 A1 does not solve the problem of the large size of the vessel and sails and also suffers such problems.

The systems disclosed by US 7146918 B2 and WO 2016/142566 A1 also suffer from the limited energy production due to the difference of densities between water, which drives the turbine, and air, which propels the vessel via the sail. In particular, wind interacting with sails generates a propulsion force which propels the sailboat. Water flowing through the turbine, to rotate its blades and generate electricity, produces a drag force that slows the sailboat down. As there is a big difference between the water and air density, and as the propulsion force must be greater than the drag force in order to the sailboat to move forward, the surface of the sails must be much bigger than the swept area of the turbine and, consequently, limit the energy produced by the turbine, which is proportional to its swept area, as the sail surface cannot grow indefinitely.

US 2009/0127861 A1 discloses a fluid-dynamic renewable energy harvesting system, comprising: plural fluid-foil means for contacting proximate flow fields of a fluid current when said fluid current exists and carries fluid current energy in the form of fluid-dynamic kinetic energy; an effective axis of rotation around which each of said fluid-foil means can effectively rotate in orientation to some extent, said axis of rotation being disposed within 60 degrees of vertical during normal operation of said fluid-dynamic energy harvesting system; control system means including actuator means, for controlling time-variable orientations of said fluid-foil means relative to said proximate flow fields of said fluid current when said fluid current exists and carries fluid current energy in the form of fluid-dynamic kinetic energy; buoyant support means for utilizing a buoyancy force from fluid displacement to at least partially contribute to supporting said fluid-foil means above a ground surface; connecting means for connecting said plural fluid-foil means in a sequential arrangement, including connecting members that connect adjacently-located fluid-foil means in said sequential arrangement; and energy harvesting means including said control system means, for converting a portion of said fluid-dynamic kinetic energy into net work on said fluid-foil means over the course of a cycle of substantially periodic motion of said fluid-foil means, by utilizing time-variable fluid-dynamic pressure distributions and resulting forces acting on said fluid-foil means at said time-variable orientations to contribute to driving said substantially periodic motion when said fluid current exists and carries fluid current energy in the form of fluid-dynamic kinetic energy; said energy harvesting means further including energy conversion means for converting at least some of said net work into energy in a desired form for at least one of transmission, storage, processing and use.

US 2009/0127861 A1 further discloses that said connecting means includes a substantially closed-loop cable linking all of the plural fluid-foil means in a closed-loop sequential arrangement; said closed-loop cable loops around at least two buoyantly supported rotatable pulleys; said closed-loop cable and the plural fluid-foil means together execute the cycle of periodic motion, around the at least two buoyantly supported rotatable pulleys, and wherein the energy harvesting means utilizes transfer of some work from said plural fluid-foil means, through tension in the closed-loop cable, to rotational work on at least one buoyantly supported rotatable pulley; and wherein the energy conversion means comprises generator means for converting said rotational work to energy in a desired form comprising at least one of electrical energy and chemical energy.

The fluid-dynamic renewable energy harvesting system disclosed by US 2009/0127861 A1 drives generators located at the buoyantly supported rotatable pulleys by friction with the closed-loop cable linking the plural fluid-foil means. Said generators are electrically connected to an external electrical network. The plural fluid-foil means are electrically isolated from the external electrical network. US 2009/0127861 A1 discloses that the fluid-foil means can comprise water and/or wind turbines, but such turbines are only for on-board energy consumption and are not electrically connected to any external electrical network.

One disadvantage of US 2009/0127861 A1 is that as the generator means are driven by friction with the substantially closed-loop cable, the tension of said closed-loop cable needs to be as high as possible in order to reduce friction loses between the closed-loop cable and the generator means, which means that said closed-loop cable needs an elevated cross-section and is prone to breakage due to the high forces it withstands.

Typically, renewable electricity generation suffers from what is known as intermittency, which is the fluctuation in power output due to variation in natural resource (wind, solar radiation, ...). Intermittency of renewable energy increases the difficulty to manage the electricity system/grid. A controllable and predictable power output of a power plant is preferred. The present invention also aims to provide a predictable and controllable system for producing electricity from a renewable source, in particular, from a fluid stream in a body of water, so that it eases the management of the electricity grid and at least partially overcomes the intermittency problems caused by the traditional renewable energy sources, in particular, solar and wind.

### Brief description of the invention

The present invention aims to overcome the aforementioned drawbacks of the prior art by disclosing, according to a first aspect, a system for producing electricity from a fluid stream in a body of water comprising at least one floating vessel which comprises: at least one hull; at least one foil for propelling the floating vessel; at least one underwater turbine operatively connected to at least one electrical generator for producing electricity; wherein the system further comprises at least one guide cable connected to the at least one floating vessel for guiding said at least one floating vessel along a path; and wherein said at least one foil is an underwater hydrofoil for propelling the at least one floating vessel along the path defined by the at least one guide cable. In particular, the first aspect of the present invention discloses a system for producing electricity from a fluid stream in a body of water comprising: at least one guiding unit defining a closed loop path; a plurality of floating vessels arranged in a spaced apart configuration, each floating vessel comprising at least one hull; at least one hydrofoil for propelling the floating vessel along the at least one guiding unit; at least one underwater turbine operatively connected to at least one electrical generator for producing electric energy; wherein each floating vessel is slidably connected to the at least one guiding unit and is electrically connected to at least one power line for transmitting the electric energy produced by its at least one electrical generator to an external electrical network or to an external consumer. Besides overcoming the aforementioned drawbacks of the prior art, the present invention provides further innovations and benefits, which will be detailed hereinbelow.

An advantage of the present invention when compared to other tidal or ocean current based energy production devices known in the art is that it can be deployed in areas with slow or weak tidal or ocean currents, thereby increasing the number of feasible possibilities for its location. Tidal or ocean currents based energy production devices known in the art are typically placed in areas having fast or strong tidal or ocean currents, thus limiting the number of feasible locations.

The present invention is preferably configured for producing electricity from a fluid stream from an ocean, a sea or a lake, although any other suitable body of water can also be used.

Power generated by a turbine is proportional to the density of the fluid. Therefore, when compared to a wind turbine of equivalent size, the system of the present invention can produce more energy as the density of water is much greater than the density of air (roughly 800 times greater).

Power generated by a turbine is proportional to the fluid speed cubed, so that small increments in the fluid speed produce huge increments in power output of a turbine.

According to the first aspect of the present invention, the at least one underwater turbine may be arranged so that apparent speed of the fluid stream drives it, instead of the real speed.

Apparent speed of the tide or ocean current is the result of the vector sum of the tide or ocean real speed and of the tide or ocean current relative speed due to the movement of the floating vessel. In other words, apparent speed of the fluid stream is the result of the vector sum of the real speed of the fluid stream and of the relative speed of the fluid stream due to the movement of the floating vessel. Said real speed can also be known as true speed.

Consequently, when compared with other known tidal or ocean current based electricity production systems which are only driven by the tide or ocean current real speed as said known systems are stationary, the system object of the present invention is able to have a greater power, i.e. is able to produce more electricity, as, due to the movement of the floating vessels, it is the apparent speed of the tide or ocean current the one driving the at least one underwater turbine of each floating vessel, thereby greatly increasing the power generated by said at least one underwater turbine as power generated by a turbine is proportional to the fluid speed cubed. When compared to systems as the ones disclosed in the known prior art, such as the ones of US 7146918 B2 and WO 2016/142566 A1, the propulsion force generated by the apparent speed of the fluid interacting with the at least one hydrofoil of the floating vessels of the present invention is increased per surface unit of said foil, thereby the relation between foil and turbine dimensions is optimised. Said better proportion is due to the fact that in the present invention the fluid propelling the vessel and the fluid flowing through the turbine is the same, and, thus, have the same density, whereas in the systems disclosed by US 7146918 B2 and WO 2016/142566 A1 the vessel is propelled by air and the turbine is driven by water, density of water being roughly 800 times greater than the one of air. Said optimisation of the relation between surface of the foil, hydrofoil in the case of the present invention, and surface of the turbine, allows for a reduction of the surface of the foil for a given surface of the turbine or for an increased surface of the turbine, which results in an increased power, for a given surface of the foil.

Moreover, compared with systems propelled by wind as the ones disclosed by US 7146918 B2 and WO 2016/142566 A1, tides and ocean currents are more stable and predictable than wind, and consequently, a tidal or ocean current powered electricity production system as the one of the present invention is easier to integrate in the electricity system.

It is undisputed the need to increase the use of renewable energy sources, especially to substitute other energy sources with a high carbon footprint. Although they are environmentally harmful, fossil-based electric generation is normally predictable, and manageable , both being very important for an efficient and secure management of the electric grid. Solar and wind are difficult to predict and manage, as they are subject to weather conditions. Even predictability is not enough for known renewable energy sources, as for example, it is predictable that solar based power generation cannot produce electricity during night, which leads to the known problem of intermittency of renewable energy sources. The present invention aims to overcome these problems of known renewable energy sources as it will be able to produce a substantially predictable and manageable power output. Indeed, the system object of the present invention is also able to adapt to the load of the electric grid, for example, by reducing the speed of the floating vessels, and thus, reducing the apparent speed of the fluid stream driving the underwater turbines, thereby reducing the energy output.

Ocean currents are a source of constant and renewable kinetic energy resulting from the continuous displacement at a moderate real speed (typically fluctuate between 0,5 and 1 m/s) in areas over thousands of km² at depths of typically less than 1.000 m and within 100 km from the coast of countries such as United States of America, Brazil, South Africa, Australia and Japan, among others. A similar phenomenon relates to tidal currents in regions like Europe, Canda and China, among others, with the peculiarity of the constant change in water speed resulting from tidal cycles.

The system object of the present invention is able to extract the kinetic energy of the aforementioned relatively slow ocean and tidal currents and generate electricity in a predictable and manageable manner. To this end, as previously described, the floating vessels of the system object of the present invention extract the kinetic energy from the apparent speed of the stream of water, as the floating vessels move along the water current with a hydrofoil, thereby generating a relative speed that is vector added to the real speed of the fluid stream.

As the at least one turbine of each floating vessel generates electricity with the apparent speed generated from the displacement of the floating vessel along the guiding element, the electrical generation does not directly depend on the real velocity of the stream of water, but on the speed at which the floating vessels move propelled by its at least one hydrofoil.

As stated hereinabove, the density of water is approximately 800 times greater than the one of air. Due to this difference between air and water densities, systems as the ones disclosed in US 7146918 B2 and WO 2016/142566 A1 balance lateral forces to maintain a certain heading with the aid of the keel that minimizes lateral motion, i.e. drift, of the vessel under sail, i.e. leeway, and that acts as a counterweight to the lateral force of the wind on the sail(s) that causes rolling to the side, i.e. heeling. As in the present invention the same fluid is used to propel the floating vessels and to drive the corresponding at least one underwater turbine, drift of the floating vessels cannot be compensated with a keel or luff. The at least one guiding unit compensates the drift of the floating vessels and guides them along a path defined by the at least one guiding unit. In this way, an overall balance of forces of the system is achieved, with the vessels advancing at a certain speed that generates a certain nominal apparent velocity or speed of the fluid, which both propel the hydrofoils and drive the turbines from which the system generates electricity.

The at least one hydrofoil of each floating vessel of the system according to the first aspect of the present invention may also be named as underwater hydrofoil, as it is placed substantially or completely under water surface, or waterline, of the body of water.

According to the first aspect of the present invention the system may further comprise one or more travellers slidably connected to the at least one guiding unit, each traveller being operatively connected to at least one floating vessel. Preferably, each floating vessel is operatively connected to a corresponding traveller. Alternatively, the at least one hull may be directly connected in a slidable manner to the at least one guiding unit.

According to the first aspect of the present invention, each traveller may be operatively connected to the floating vessel by a connection cable. Among other benefits, this allows the at least one guiding unit to be at a homogeneous depth below the water level, so that the at least one guiding unit does not impede marine traffic. In embodiments wherein a traveller is operatively connected to more than one floating vessel, said traveller may be connected to more than one connection cable. Alternatively, a traveller may be connected to a single floating vessel by one or more connection cables; and said floating vessel may also be attached by a cable or similar to one or more additional floating vessels.

According to the first aspect of the present invention, the system may further comprise a mooring unit for mooring said at least one guiding unit. Preferably, said mooring unit is a floating mooring unit. Alternatively, the mooring unit is anchored to the bed of the body of water, in which case the mooring unit can be configured to rest on the bed of the body of water. In certain embodiments of the present invention, part of the mooring unit may be a floating mooring unit and part may be anchored to the bed of the body of water.

According to the first aspect of the present invention, the at least one guiding unit may comprise a first track or simply a track.

According to the first aspect of the present invention, the system may further comprise a second track diverging from the first track at a first location, and a first switch located at said first location configured to direct the floating vessels at least to the first track or to the second track.

According to the first aspect of the present invention, the second track may converge to the first track at a second location, and the system may further comprise a second switch located at said second location, said second switch being configured at least to allow or block the return of the floating vessels from the second track to the first track. Having multiple tracks allows that, for example, the first track is configured as a main track or electricity generating track along which the floating vessels move to generate electricity, and the second track is configured as a maintenance track, for example, for temporarily storing the floating vessels that need maintenance, which can be returned to the first track once the maintenance operations are finished.

According to the first aspect of the present invention, said second track may converge to a third track at a third location, and the system may further comprise a third switch located at said third location, said third switch being configured at least to direct the floating vessels from the second track to the third track, said third track defining a closed loop path. When the system comprises three or more tracks, two or more tracks can be configured as guiding units defining a closed loop path so that one or more floating vessels can move along the corresponding tracks generating electrical energy. These tracks can also be known as power tracks. In this latter configuration, the non-power tracks can be configured to connect the power tracks and/or to serve as maintenance or parking areas of one or more floating vessels of the system. Having multiple power tracks in a system according to the present invention allows to have floating vessels at different speeds at each power track, for example, in order to manage the power generation levels of the overall system.

Besides the previously described configurations of one or more tracks comprised in the system according to the first aspect of the present invention, other configurations of one or more tracks are also possible and within the scope of the present invention.

According to the first aspect of the present invention, the system may further comprise robots that move along the guide elements performing maintenance operations, for example, cleaning the guide elements, or supervision operations, as it is important to monitor that the system operates as expected and to check the system for damage, for example, for cracks due to material fatigue. Said robots may be stored in a non-power track and be deployed when needed. Said robots are preferably powered by electric motors and charged while they are resting at the non-power track. The robots are preferably charged by wireless power transmission.

According to the first aspect of the present invention, at least one of the tracks may comprise at least two guide elements arranged parallel to one another, and each traveller may comprise at least two rollers, each roller being configured to roll along a corresponding guide element.

According to the first aspect of the present invention, each guide element may comprise in at least one stretch a substantially rigid tubular element and/or in at least one stretch a guide cable.

According to the first aspect of the present invention, at least one of the tracks may comprise one or more separators of the at least two guide elements. Said one or more separators may also be connected to a mooring unit by one or more connectors.

According to the first aspect of the present invention, the connection cable may comprise an electrical cable for transmitting the electric energy generated by the at least one generator of the vessel to at least one electromagnetic emitter comprised in the traveller; and at least the first track may comprise a plurality of electromagnetic receivers electrically connected to the at least one power line.

According to the first aspect of the present invention, the system may comprise one or more guiding units equipped with electromagnetic receivers electrically connected to the at least power line, with at least one traveller comprising at least one electromagnetic emitter for such guiding unit, each traveller being operatively connected to at least one floating vessel; and the system may further comprise one or more additional guiding units, of any kind described in this document; the floating vessels also being slidably connected to said additional guiding units.

According to the first aspect of the present invention, the at least one electromagnetic emitter may be comprised in the traveller and the plurality of electromagnetic receivers of at least the first track may be arranged substantially parallel one another, the at least one electromagnetic emitter and the plurality of electromagnetic receivers being spaced apart at a certain distance.

According to the first aspect of the present invention, the one or more separators may also be configured to support the plurality of electromagnetic receivers. In particular, a single separator may be configured to support multiple electromagnetic receivers by a supporting structure.

According to the first aspect of the present invention, the floating vessels may be electrically connected to the at least one power line by at least one spool located within the closed loop path; said spool being electrically connected to the at least one power line and to the floating vessels by at least one electrically conducting cable configured to be wound and unwound on said spool as the plurality of floating vessels move along the at least one guiding unit.

According to the first aspect of the present invention, the at least one spool may comprise a plurality of electrically conducting cables, each electrically conducting cable being electrically connected to at least one floating vessel.

According to the first aspect of the present invention, the at least one spool may comprise one electrically conducting cable for each floating vessel, each electrically conducting cable being electrically connected to the corresponding floating vessel.

According to the first aspect of the present invention, the at least one electrically conducting cable may be configured to float on the body of water.

According to the first aspect of the present invention, the plurality of floating vessels may be electrically interconnected by an interconnecting cable, which may be electrically connected to the at least one generator of each floating vessel and elevated at a certain height above water surface by an elevating structure; and wherein the system may further comprise at least one electricity collection unit electrically connected to the interconnecting cable and to the at least one power line.

According to the first aspect of the present invention, the at least one electricity collection unit may be substantially stationary, and the interconnecting cable may move together with the plurality of floating vessels.

According to the first aspect of the present invention, the plurality of floating vessels may be electrically interconnected by an interconnecting cable, which may be elevated at a certain height above water surface by one or more electricity collection units electrically connected to the interconnecting cable and to the at least one power line; said interconnecting cable being electrically connected to the at least one generator of each floating vessel. In this case, the interconnecting cable and the electricity collection units may be substantially stationary, with the floating vessels moving along the closed loop path while maintain an electrical connection to the interconnecting cable.

According to the first aspect of the present invention, the system may further comprise wireless electricity transfer means between the at least one electricity collection unit and the interconnecting cable.

According to the first aspect of the present invention, the at least one electricity collection unit may comprise energy transfer means in contact with the interconnecting cable. Preferably, said energy transfer means comprise a pantograph, that is to say, according to the first aspect of the present invention, the at least one electricity collection unit may comprise a pantograph in contact with the interconnecting cable. However, other energy transferring means between the interconnecting cable and the at least one electricity collection unit are also possible. Said energy transfer is preferably done by contact between the electricity collection unit and the interconnecting cable, although a wireless electric transmission can also be used, as stated above.

According to the first aspect of the present invention, the at least one guiding unit may comprise at least one guide cable.

According to the first aspect of the present invention, the plurality of floating vessels may be arranged in a spaced apart configuration for forming one or more convoys. The distance between floating vessels may be uniform or may be different one another. Preferably, the distance between floating vessels is such that turbulences created by previous vessels does not reach succeeding ones, in order to optimize performance of the system, and in particular, in order to optimize its energy production.

According to the first aspect of the present invention, one or more floating vessels may comprise two or more hulls. Preferably, each hull comprises at least one underwater turbine. Preferably, the distance between contiguous adjacent hulls is such that turbulences created by the at least one underwater turbine and/or the at least one hydrofoil do not affect each other.

According to the first aspect of the present invention, the two or more hulls may be interconnected by a connecting structure. Preferably, the connecting structure is configured to be above water line. This configuration has the advantage that the connecting structure does not add hydrodynamic drag to the floating vessel. Despite this, in some embodiments the connecting structure may be configured to be below water line or on the water line, in which case said connecting structure is preferably designed to minimize its hydrodynamic drag.

According to the first aspect of the present invention, one or more floating vessels may comprise a flywheel supported by the connecting structure. Said flywheel is preferably driven by paddles inserted into the body of water and/or by an electric motor and is preferably operatively connected to a generator that may be electrically connected to the at least one power line.

Besides the aforementioned ones, another problem of traditional renewable energy generation, such as solar and wind, is that they are typically connected to the electric grid by power electronic devices, and not by direct electromagnetic field coupling, as with traditional synchronous generators in most fossil and nuclear-based power plants. This means that traditional fossil and nuclear power plants also provide inertia to the electric grid or system, thanks to their rotational masses being synchronously coupled to the electric grid), which is something that wind and solar based power plants do not. Embodiments of the present invention wherein one or more floating vessels comprise the aforementioned flywheel, also provide inertia to the electric grid.

According to the first aspect of the present invention, the connecting structure may be of a substantially circular shape. However, it could have any other shape. Said connecting structure is preferably shaped as to reduce the hydrodynamic and/or aerodynamic drag of its floating vessel, while optimising the strength, cost and performance of the structure.

According to the first aspect of the present invention, one or more floating vessels may further comprise at least one reinforcing element interconnecting the at least one hydrofoil with the connecting structure. Said at least one reinforcing element may be configured to also increase the stiffness and structural integrity of the at least one hydrofoil.

According to the first aspect of the present invention, the at least one hydrofoil of one or more floating vessels may be made of at least two parts joined together in an articulated manner by an articulated connection, so that the at least one hydrofoil can change its shape and, thereby, change its hydrodynamic properties, for example, lift or drag.

According to the first aspect of the present invention, said at least one articulated connection may be connected to the connecting structure by at least one reinforcing element. Preferably, the at least one reinforcing element is placed above waterline. Alternatively, the at least one reinforcing element can be placed below or on waterline.

According to the first aspect of the present invention, the at least one hydrofoil of one or more floating vessels may be made of at least two parts joined together in an extensible and contractable manner, so that the area of said at least one hydrofoil may be extended or reduced in order to adjust its hydrodynamic properties to the needs of the corresponding vessel and the system of the present invention. Alternatively or complementary, one or more floating vessels may comprise means to adjust the penetration of the at least one hydrofoil in the water, that is to say, means to partially insert or remove the at least one hydrofoil from water, so that the submerged surface of the hydrofoil varies.

According to the first aspect of the present invention, the at least one hydrofoil of one or more floating vessels may comprise a plurality of ribs surrounded by a skin defining the external surface of said at least one hydrofoil. Preferably, said at least one hydrofoil of one or more floating vessels further comprises stringers interconnecting the plurality of ribs.

According to the first aspect of the present invention, the at least one hydrofoil of one or more floating vessels may comprise a group of at least two hydrofoil segments, each segment being slidably connected to reinforcing elements operatively connected to the connecting structure, said group being configured to act as a single hydrofoil. Preferably each hydrofoil segment is rigid or at least substantially rigid. Even though each group of hydrofoil segments function as a single hydrofoil, there may be a gap between adjacent hydrofoil segments that under certain conditions can produce a channel effect that enhances hydrodynamic properties of the group of hydrofoil segments acting as a single hydrofoil.

According to the first aspect of the present invention, each hydrofoil segment may comprise a plurality of ribs surrounded by a skin defining the external surface of said hydrofoil segment. Preferably, each hydrofoil segment further comprises stringers interconnecting the plurality of ribs.

According to the first aspect of the present invention, the at least one underwater hydrofoil may be arranged in an adjustable angular position manner, that is to say, the at least one hydrofoil is arranged so that its angular position can be adjusted, i.e., the at least one hydrofoil can be rotated around a rotation axis, so that it can be oriented to the apparent fluid speed of the fluid stream with a determined attack angle.

According to the first aspect of the present invention, the at least one turbine may be a horizontal axis water turbine.

According to the first aspect of the present invention, the at least one turbine may be a vertical axis water turbine.

According to the first aspect of the present invention, one or more floating vessels may comprise one or more horizontal axis water turbines and one or more vertical axis water turbines.

According to the first aspect of the present invention, the at least one turbine may be neither a horizontal axis water turbine, nor a vertical axis water turbine. For example, it may be a tail like turbine or a membrane tidal turbine, which is also known as a biomimetic tidal turbine. Biomimetic tidal turbines are disclosed, for example, by EP 3039284 A1, EP 3269972 A1 and EP 3643911 A1. This kind of turbine may also be combined with horizontal and/or vertical water turbines in a single floating vessel.

Embodiments of the first aspect of the present invention comprising a vessel having two or more water turbines could comprise at least one horizontal axis water turbine and at least one vertical axis water turbine.

According to the first aspect of the present invention, the angular position of the at least one turbine may be adjustable. This allows the at least turbine to be oriented so that the apparent speed of the fluid stream drives it and maximizes its energy production. Said fluid stream may be an ocean current and/or a tidal stream.

According to the first aspect of the present invention, the at least one turbine of one or more floating vessels may comprise at least two blades. Said at least one turbine may be of fixed or of variable pitch.

According to the first aspect of the present invention, one or more floating vessels may comprise at least one support structure of the at least one underwater turbine, said support structure being preferably connected to the vessel in an articulated manner. Preferably, said support structure is movable from a deployed position in which the underwater turbine is fully submerged and a resting position in which at least part of the underwater turbine projects above the water surface or water line. Said support structure may be moved to the resting position, for example, when there is a storm or strong tides that could damage the at least one underwater turbine or when maintenance operations need to be performed.

According to the first aspect of the present invention, one or more floating vessels may comprise one support structure for each hull thereof, each support structure comprising at least one underwater turbine.

According to the first aspect of the present invention, the system may comprise two guiding units, each one arranged on opposite sides of the floating vessels.

According to the first aspect of the present invention, the guiding unit may also be configured to transmit electrical power, so that the element guides the floating vessels and transmits electrical power to a further floating vessel and/or to an external electrical network or to an external consumer.

According to the first aspect of the present invention, the system may further comprise an electrical substation electrically connected with the at least one power line.

According to the first aspect of the present invention, the external electrical network may be a distribution or a transmission electrical network.

According to the first aspect of the present invention, one or more floating vessels may further comprise at least one motor operatively connected to at least one propeller. In this case, the at least one hydrofoil of said one or more floating vessels may be used as a rudder. Said at least one motor is preferably powered with the power generated by the at least one electrical generator of the corresponding floating vessel.

One of the benefits of the system according to the first aspect of the present invention is that for a given constant real speed of the stream of water, by adjusting the angle of attack of the at least one hydrofoil of each floating vessel with respect to the relative direction of the fluid stream in the body of water and/or by changing the shape of the at least one hydrofoil and/or by extending or contracting the hydrofoil and/or by taking the at least one hydrofoil in or out of the body of water, the advance speed of the corresponding floating vessel can be adjusted, so that it moves faster or slower, thereby generating more or less electricity, for example, depending on the needs of the electrical system or of the electrical grid.

Similarly, when faced with a variable real speed of the fluid stream of the body of water, by adjusting the angle of attack of the at least one hydrofoil with respect to the relative direction of the fluid stream and/or by changing the shape of the at least one hydrofoil and/or by extending or contracting the hydrofoil and/or by taking the at least one hydrofoil in or out of the body of water, the floating vessel can move in an advance direction at a constant speed while maintaining a constant electricity generation.

According to a second aspect of the present invention, it is also disclosed a method for producing electricity from a fluid stream in a body of water comprising the following steps:
- providing a system according to the first aspect of the present invention;
- moving the plurality of floating vessels along the at least one guiding unit following a first advance direction; and
- generating electricity with the at least one underwater turbine of each floating vessel.

In particular, according to a second aspect of the present invention, it is disclosed a method for producing electricity from a fluid stream in a body of water comprising the following steps:
- providing a system according to the first aspect of the present invention;
- moving the plurality of floating vessels along the at least one guiding unit following a first advance direction;
- generating electric energy with the at least one generator operatively connected to the at least one underwater turbine of each floating vessel; and
- transferring the electric energy produced by the at least one generator of each floating vessel to an external electrical network or to an external consumer by the at least one power line.

According to the second aspect of the present invention, the method may further comprise the step of adjusting the electric energy production based on the needs of the external electrical network, the external electrical consumer or to an external network. This makes the system of the present invention really advantageous for the electrical grid operator, in particular, when the electrical grid is also powered by known intermittent and unpredictable renewable energy sources.

According to the second aspect of the present invention, the method may further comprise the step of adjusting the angular position of the at least one underwater hydrofoil of one or more floating vessels and/or adjusting the shape of the at least one underwater hydrofoil of one or more floating vessels, so that the speed of the corresponding vessel moving along the at least one guiding unit increases or decreases. Increasing or reducing the advance speed of the vessels may be advantageous, for example, in order to adjust the energy production of the system, in order to adapt the system to the needs of the external power grid or changing environmental conditions (wind, tides, currents, waves, etc.), for maintenance, etc.

The at least one hydrofoil of a floating vessel may be oriented with a certain angle of attack towards the relative fluid stream to optimize its lift coefficient. Alternatively, its lift/drag coefficient may be changed by changing the angle of attack of the at least one hydrofoil. Braking the one or more floating vessels may be desired, for example, in case of a storm, in case of breakdown, for maintenance, etc. Moreover, the angular position of the at least one hydrofoil may also be adjusted when it is desired to reverse the advance direction of the vessels, or when direction of the fluid stream changes.

In the case of a storm or maintenance, it is preferred that the floating vessels rest static, in which case the corresponding at least one hydrofoil can be oriented parallel to the real fluid stream, that is to say, the at least one hydrofoil may be heaving to, in order to reduce the lift / drag coefficient thereof.

According to the second aspect of the present invention, the method may further comprise the step of adjusting the angular position of the at least one turbine of one or more floating vessels to maximize its energy production. Preferably, the angular position of the at least one turbine is adjusted so that apparent speed of the fluid stream drives it.

According to the second aspect of the present invention, the method may further comprise the steps of: moving a floating vessel along a first track; and directing the floating vessel to a second track.

According to the second aspect of the present invention, the method may further comprise the step of performing maintenance tasks to said floating vessel; and returning the floating vessel to the first track.

According to the second aspect of the present invention, the method may further comprise the step of parking the floating vessel at said second track; and returning the floating vessel to the first track.

According to the second aspect of the present invention, the method may further comprise the steps of: moving a floating vessel along a first track; directing the floating vessel to a second track; directing said floating vessel to the third track; moving said floating vessel along the third track following a first advance direction; generating electric energy with the at least one generator operatively connected to the at least one underwater turbine of said floating vessel; and transferring the electric energy produced by the at least one generator of said floating vessel to the external electrical network or to the external consumer by the at least one power line.

According to the second aspect of the present invention, the method may further comprise the step of moving the floating vessels along the closed loop path defined by the at least one guiding unit following a second advance direction, said second advance direction being opposite the first one.

According to the second aspect of the present invention, the method may further comprise the step of turning on the at least one motor operatively connected to at least one propeller for accelerating one or more floating vessels after they change their advance direction. Preferably, the method further comprises the step of turning off the at least one motor once the one or more floating vessels reach a certain speed.

According to the second aspect of the present invention, the method may further comprise the step of propelling one or more floating vessels with the corresponding at least one motor. However, this should preferably be used only when conditions of weather, tide, waves, etc. are adverse and do not allow operation of the system without the use of mechanical or additional propulsion. One or more floating vessels may also be propelled by its corresponding at least one motor when transporting them to the deployment location of the system according to the present invention, or when returning them to port or shipyard for maintenance or repair.

According to the second aspect of the present invention, the method may further comprise the step of adjusting the surface of the at least one hydrofoil in contact with the body of water of one or more floating vessels. This can be done, for example, by increasing or decreasing the overall surface of the at least one hydrofoil of one or more floating vessels; by increasing or reducing the penetration of the at least one hydrofoil in the body of water of one or more floating vessels, etc. This allows to adjust the propulsion force of one or more vessels and, therefore, the advance speed thereof, which results in an adjustment of the apparent speed of the fluid stream in a body of water and, consequently, in an adjustment of the power generated by the at least one underwater turbine of each floating vessel, as its energy production is proportional to the fluid speed cubed.

It will be understood that, unless otherwise provided, features described as being part of the first aspect of the present invention can also be applied to the second aspect of the present invention, and vice versa.

Although described in the context of the first and second aspects of the present invention, one or more of said floating vessels could also operate independently from the other elements of the system, that is to say, one or more of said floating vessels could also operate as independent vessels.

In the present invention, a floating vessel is understood as a vessel that rests on the surface of a body of water (positive floatability), but also as a vessel that is at a certain depth in the body of water (neutral floatability).

It will be understood that references to geometric position, such as parallel, perpendicular, tangent, etc. allow deviations up to ± 5° from the theoretical position defined by this nomenclature.

It will also be understood that any range of values given may not be optimal in extreme values and may require adaptations of the invention to these extreme values are applicable, such adaptations being within reach of a skilled person.

Other features of the invention appear from the following detailed description of an embodiment.

### Brief description of the Figures

The foregoing and other advantages and features will be more fully understood from the following detailed description of an embodiment with reference to the accompanying drawings, to be taken in an illustrative and non-limitative manner, in which:
FIG. 1 shows a top schematic view of a first exemplary embodiment of a system for producing electricity from a fluid stream in a body of water according to the present invention.
FIG. 2 shows a bottom perspective view of a first exemplary embodiment of a floating vessel of a system for producing electricity according to the present invention.
FIG. 3 shows a top view of the first exemplary embodiment of a floating vessel shown in FIG. 2.
FIG. 4 shows a front view of a second exemplary embodiment of a floating vessel of a system for producing electricity according to the present invention.
FIG. 5 shows a top perspective view of the second exemplary embodiment of a floating vessel shown in FIG. 4.
FIG. 6 shows different adjustments of the hydrofoil and the support structures of corresponding underwater turbines of the second exemplary embodiment of a floating vessel shown in FIGS. 4 and 5.
FIG. 7 shows different angular positions of the underwater turbines and the hydrofoil of the second exemplary embodiment of a floating vessel shown in FIGS. 4 to 6.
FIG. 8 shows a bottom perspective view of a third exemplary embodiment of a floating vessel of a system for producing electricity according to the present invention.
FIG. 9 shows a top view of the third exemplary embodiment of a floating vessel shown in FIG. 8.
FIG. 10 shows a bottom perspective view of a fourth exemplary embodiment of a floating vessel of a system for producing electricity according to the present invention.
FIG. 11 shows a top view of the fourth exemplary embodiment of a floating vessel shown in FIG. 10.
FIG. 12 shows a bottom perspective view of a fifth exemplary embodiment of a floating vessel of a system for producing electricity according to the present invention.
FIG. 13 shows a top view of a first configuration of the fifth exemplary embodiment of a floating vessel shown in FIG. 12.
FIG. 14 shows a top view of a second configuration of the fifth exemplary embodiment of a floating vessel shown in FIGS. 12 and 13.
FIG. 15 shows a top view of a third configuration of the fifth exemplary embodiment of a floating vessel shown in FIGS. 12 to 14.
FIG. 16 shows a partial front view of a second exemplary embodiment of a system for producing electricity from a fluid stream in a body of water according to the present invention.
FIG. 17 shows a partial top view of the second exemplary embodiment of a system for producing electricity shown in FIG. 16.
FIG. 18 shows a partial side view of the second exemplary embodiment of a system for producing electricity shown in FIGS. 16 and 17.
FIG. 19 shows a front view of a traveller of the second exemplary embodiment of a system for producing electricity shown in FIGS. 16 to 18.
FIG. 20 shows a cross section of a guiding unit and corresponding mooring unit of the second exemplary embodiment of a system for producing electricity shown in FIGS. 16 to 19.
FIG. 21 shows a side schematic view of a detail of the second exemplary embodiment of a system for producing electricity shown in FIGS. 16 to 20.
FIG. 22 shows a front detail view of a guiding unit and a traveller of a third exemplary embodiment of a system for producing electricity from a fluid stream in a body of water according to the present invention.
FIG. 23 shows a side view of the guiding unit and the traveller shown in FIG. 22.
FIG. 24 shows a top schematic view of a fourth exemplary embodiment of a system for producing electricity from a fluid stream in a body of water according to the present invention.
FIG. 25 shows a top schematic view of a fifth exemplary embodiment of a system for producing electricity from a fluid stream in a body of water according to the present invention, together with several detail views of said fifth exemplary embodiment.
FIG. 26 shows a top schematic view of a sixth and a seventh exemplary embodiment of a system for producing electricity from a fluid stream in a body of water according to the present invention.
FIG. 27 shows a front view of an exemplary embodiment of a switch of a system for producing electricity according to the present invention.
FIG. 28 shows a top view of the exemplary embodiment of a switch shown in FIG. 27.
FIG. 29 shows a top schematic view of an eighth exemplary embodiment of a system for producing electricity from a fluid stream in a body of water according to the present invention.
FIG. 30 shows a front detail view of the eighth exemplary embodiment of a system for producing electricity shown in FIG. 29.
FIG. 31 shows a side view of the eighth exemplary embodiment of a system for producing electricity shown in FIGS. 29 and 30.
FIG. 32 shows a top schematic view of a ninth exemplary embodiment of a system for producing electricity from a fluid stream in a body of water according to the present invention.
FIG. 33 shows a front detail view of the ninth exemplary embodiment of a system for producing electricity shown in FIG. 32.
FIG. 34 shows a partial front view of the ninth exemplary embodiment of a system for producing electricity shown in FIGS. 32 and 33.
FIG. 35 shows a detail side view of the ninth exemplary embodiment of a system for producing electricity shown in FIGS. 32 to 34.
FIG. 36 shows a side view of the ninth exemplary embodiment of a system for producing electricity shown in FIGS. 32 to 35.
FIG. 37 shows a front view of a sixth exemplary embodiment of a floating vessel of a system for producing electricity according to the present invention.
FIG. 38 shows a partial front view of a tenth exemplary embodiment of a system for producing electricity from a fluid stream in a body of water according to the present invention.
FIG. 39 shows a section view of the tenth exemplary embodiment of a system for producing electricity shown in FIG. 38.
FIG. 40 shows floating vessels travelling along a curved section and straight sections of the guiding unit of the second exemplary embodiment of a system for producing electricity shown in FIGS. 16 to 21.
FIG. 41 shows maintenance operations being conducted to an exemplary embodiment of a floating vessel of a system for producing electricity from a fluid stream in a body of water according to the present invention.

### Detailed description of an embodiment

The foregoing and other advantages and features will be more fully understood from the following detailed description of an embodiment with reference to the accompanying drawings, to be taken in an illustrative and not limitative way.

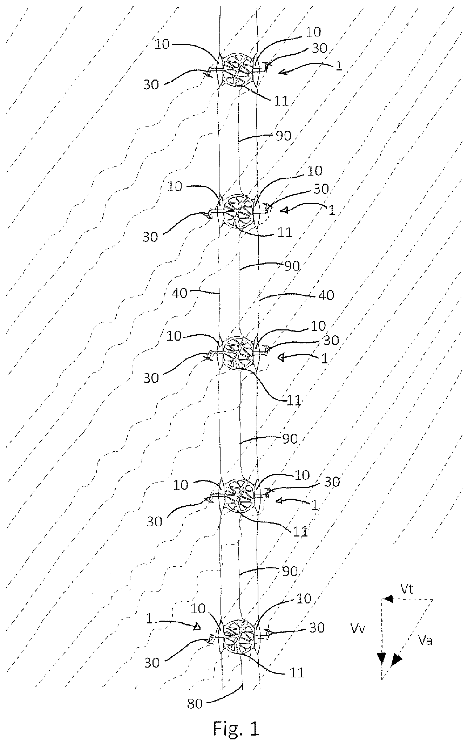

A top schematic view of a first exemplary embodiment of a system for producing electricity from a fluid stream in a body of water according to the present invention can be seen in FIG. 1. The exemplary embodiment shown comprises five floating vessels 1 arranged in a spaced apart configuration and forming a convoy. However, other embodiments of the present invention may comprise a different number of floating vessels 1.

The floating vessels 1 of this first exemplary embodiment comprise two hulls 10 interconnected by a connecting structure 11 and one hydrofoil (not visible as in this top view it is hidden by the connecting structure 11) for propelling the floating vessel. Each hull 10 comprises an underwater turbine 30 operatively connected to an electrical generator for producing electricity (not shown) and is slidably connected to a corresponding guiding unit 40 which defines a path along which the vessels 1 are guided. As can be seen, the exemplary embodiment shown comprises two guiding units 40 arranged on opposite sides of the floating vessels 1, facing one another. In other embodiments a single guiding unit 40 suffices. Other embodiments can also comprise more than two guiding units 40. The guiding units 40 define a closed loop path, and the floating vessels 1 move along the corresponding guiding units 40. In this first exemplary embodiment, the convoy of floating vessels 1 moves in a first advance direction along the path defined by the guiding units 40. Although the convoy of floating vessels 1 typically moves following said first advance direction, said convoy may also reverse its operation and move following a second advance direction following the path defined by the guiding units 40, said second advance direction being opposite the first one.

In this first exemplary embodiment, the floating vessels 1 defining the convoy are interconnected by a cable 90. Said cable 90 can be a simple mechanical connection between different floating vessels 1 or can also be used to transmit electrical power from one floating vessel 1 to another. Said cable 90 is optional and other embodiments may lack it. It is also possible that in other embodiments the floating vessels 1 are interconnected by a cable 90 in groups, for example, in a system having six floating vessels, there could be two independent groups of floating vessels 1, each of the three floating vessels 1 of a group being interconnected by a cable 90.

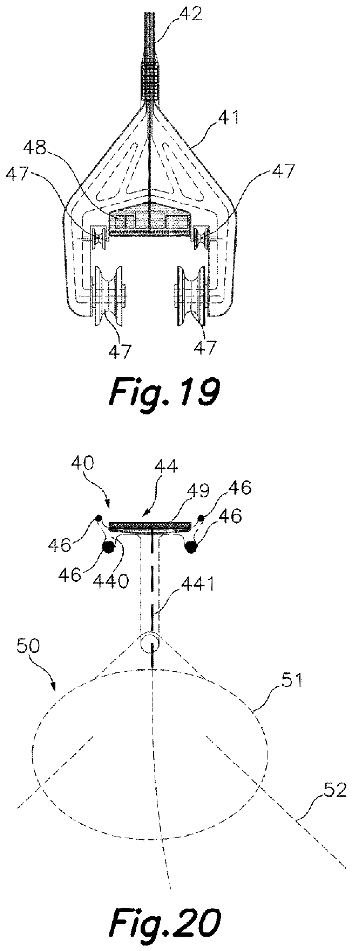

The floating vessels 1 are electrically connected to at least one power line 80 to continuously transmit power to an electrical network, storage facility, etc. on shore or land. The present invention envisages different types of electrical connection of the floating vessels 1 to the at least one power line 80, which will be described hereinbelow, at least, in the context of FIGS. 19 to 36. Said different types of electrical connection are not mutually exclusive and can be combined.

In FIG. 1, the arrow labelled as Vv depicts the real fluid stream, i.e., real velocity of the fluid stream as seen from a fixed point, the arrow labelled as Vt depicts the relative speed of the fluid stream due to the advance of the floating vessel 1 and the arrow labelled as Va depicts the apparent speed of the fluid stream impinging on the floating vessel 1 as a result of the vector sum of said real speed Vv of the fluid stream and the relative speed Vt of the fluid stream due to the advance of the vessel . This is typically represented with what is known as triangle of velocities, as depicted in FIG. 1. If a resting body is impinged by a fluid moving at a certain real speed (in vector and magnitude) from a reference system at rest, when said body is in motion, from its reference system the fluid will impinge on it with a higher relative speed (in vector and magnitude), as a result of the triangle of velocities formed by the real velocity, the forward velocity of the body and the resulting relative velocity, said relative velocity being the one that generates the different hydrodynamic or aerodynamic forces on the body.

If the body advances in a perpendicular direction to a fluid moving at a certain real speed, as the forward speed of the body increases, the relative velocity resulting from the triangle of velocities will be greater and greater, and will do so with a decreasing angle of incidence with respect to the forward axis of the body.

Therefore, when compared to known systems in the prior art wherein tidal turbines are stationary, the at least one underwater turbine 30 of the floating vessels 1 of a system according to the present invention produces a greater power as the apparent speed of the fluid stream Va driving the at least underwater turbine 30 is greater than the real speed Vv of the fluid stream that drives stationary tidal turbines. Energy production of a turbine is proportional to the fluid speed cubed, therefore, even small increments in the speed of the fluid driving a turbine can have notorious impact on its the energy production.

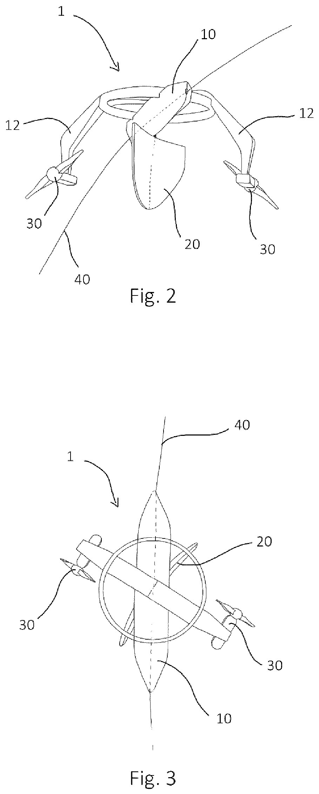

In the exemplary embodiment shown in FIG. 1 all vessels have a similar configuration (two hulls 10 connected by a connecting structure 11, each hull comprising one underwater turbine 30, etc., see above). However, in other embodiments the floating vessels can have different configurations (see, for example, FIGS. 2 to 15). Although it is preferred that all floating vessels 1 of a given system are of the same, or at least similar, type, it is also possible that in a system according to the present invention some of the floating vessels, or even all of them, are of different type.

In this first exemplary embodiment, separation between each floating vessel 1 of the convoy is substantially similar. However, in other embodiments such separation may vary between different members of the plurality of floating vessels 1 forming the convoy. Although it is preferred that the separation between floating vessels 1 is maintained substantially constant during operation of the system, said separation may also vary. The separation between different members of the convoy of floating vessels 1 is preferably such that turbulences created by the preceding floating vessel 1 do not affect a certain floating vessel 1. This is illustrated in FIG. 1 by substantially straight dotted lines which represent fluid streams, with a substantially laminar flow, and curved dotted lines which represent turbulent fluid streams due to the interaction of fluid streams with the hulls 10, hydrofoil 20 and turbines 30 of each floating vessel 1. As can be seen, after a certain distance, turbulent fluid streams due to their interaction with the corresponding floating vessel 1 become substantially laminar again. Said fluid streams can be, for example, tides or ocean currents.

For similar reasons, in embodiments of floating vessels 1 comprising more than one hull 10 and/or more than one hydrofoil 20 and/or more than one underwater turbine 30, such elements are preferably spaced apart so that their performance is not affected, or at least the impact on their performance is greatly reduced, by turbulences created by other elements of the same floating vessel 1 or other floating vessels 1.

The body of water in which the system of the present invention can be used is preferably a sea or an ocean, wherein tides and/or ocean currents are strong enough and long guiding units 40 can be placed. However, the system of the present invention can also be used in smaller bodies of water, such as lakes, etc. provided there are sufficient fluid streams.

FIGS. 2 and 3 show a bottom perspective view and a top view, respectively, of a first exemplary embodiment of a floating vessel 1 of a system for producing electricity in a body of water according to the present invention. The vessel 1 of this first exemplary embodiment comprises a single hull 10 slidably connected to a single guiding unit 40. Said hull 10 comprises a single hydrofoil 20 configured for being submerged on the body of water and propelling the vessel 1. The vessel 1 of this first exemplary embodiment comprises two underwater turbines 30, each one arranged on a corresponding support structure 12 connected to the vessel 1 in an articulated manner, and, in particular, connected to the single hull 10. Said support structures 12 are movable from a deployed position in which the corresponding underwater turbines 30 are fully submerged in the body of water, to a resting position in which at least part of the underwater turbine 30 projects above the water surface, and vice versa. Such configuration of the support structures 12 eases the maintenance of the underwater turbines 30 when they are in their resting position, among other benefits. However, in other embodiments such support structures 12 may have a fixed position, i.e., may not be pivotable. This is also applicable to the exemplary embodiments of a floating vessel 1 shown, for example, in FIGS. 3 to 9 and 12 to 15.

Said hull 10 further comprises an auxiliar structure, which in this exemplary embodiment is of a substantially circular shape, which function as a stop of the support structures 12 when they are in their deployed position.

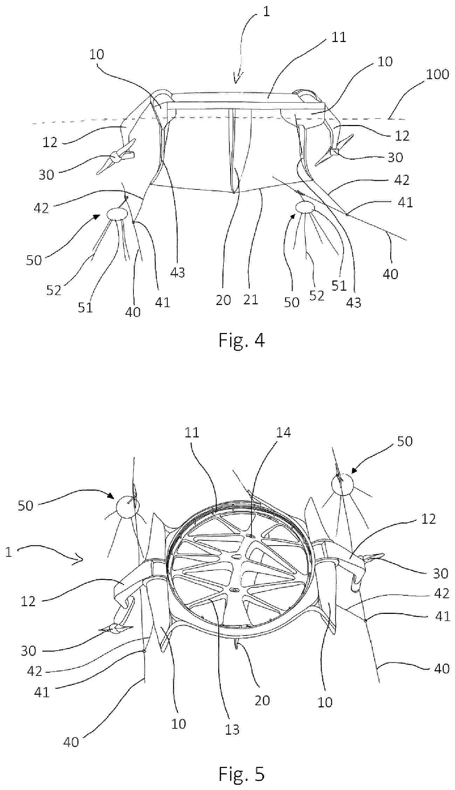

FIGS. 4 and 5 show a front view and a top perspective view, respectively, of a second exemplary embodiment of a floating vessel 1 of a system for producing electricity according to the present invention. The floating vessel 1 of this second exemplary embodiment comprises two hulls 10 interconnected by a connecting structure 11, which in this exemplary embodiment is placed above waterline 100 or water surface, which is depicted by dotted lines, in order to reduce the hydrodynamic drag of the floating vessel 1. However, in other embodiments said connecting structure 11 could also be at least partly submerged, in which case it should be preferably shaped to minimize its hydrodynamic drag.

As can be seen in FIG. 4, the hydrofoil 20 is substantially placed underwater of below water line 100. This is the reason why said hydrofoil 20 can also be named an underwater hydrofoil. This applies to other embodiments of floating vessels 1 within the scope of the present invention.

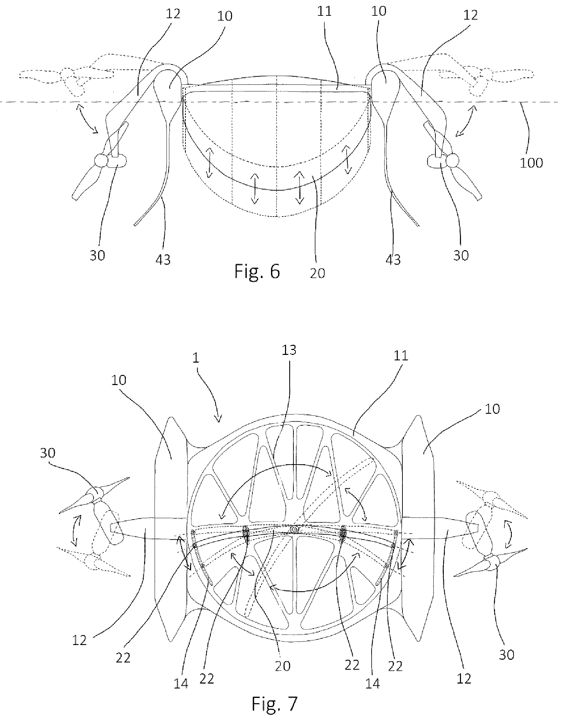

The connecting structure 11 of this second exemplary embodiment is of a substantially circular shape and comprises a plurality of reinforcing elements 13 which interconnect the hydrofoil 20 for propelling the vessel 1 with the connecting structure 11. In particular, the reinforcing elements 13 shown comprise a plurality of slots 14, although only one could also suffice, that slidably house a corresponding protruding element 22 of the hydrofoil 20 (see FIG. 7). Said reinforcing elements 13 may be fixed or may be rotatable, so that the angular position of the hydrofoil 20 can be adjusted. Other embodiments of floating vessels 1 according to the present invention can comprise other features that allow adjustment of the angular position of the hydrofoil 20 for propelling the vessel 1, for example, said hydrofoil 20 could be fixed to a rotatable shaft fixed in a rotatable manner to the reinforcing elements 13.

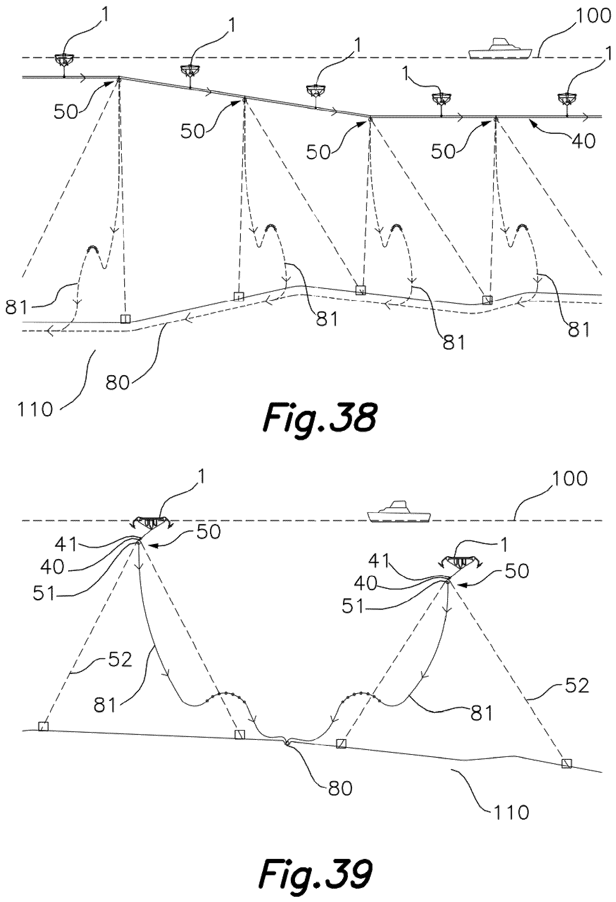

In this second exemplary embodiment, each hull 10 comprises a corresponding support structure 12 which in turn comprises a corresponding underwater turbine 30, whose angular position can be adjusted. Each hull 10 further comprises an extension 43 which on the opposing end is attached to a connection cable 42, which is in turn attached to a traveller 41 slidably connected to the corresponding guiding unit 40. As can be seen, the system according to the present invention shown in FIGS. 4 and 5 comprises two guiding units 40 arranged on opposite sides of the floating vessel 1. In the system shown, the guiding unit 40 is located spaced apart from the surface and the bed of the body of water at a depth that prevents other boats that may navigate or sail in said body of water from colliding with said guiding unit 40. This depth can be, for example, 10 m, although deeper depths (for example 50 m) or shallower depths (for example 5 m), can also be used. It is also possible to place the guiding unit 40 on the water surface, although such arrangement should be preferably avoided as it implies a certain risk that other boats, animals, people, etc. can collide with it. The extensions 43 aid in connecting the vessel 1 with deep guiding units 40. Such extensions 43 are preferably shaped as to reduce its hydrodynamic drag. In order to maintain the guiding unit 40 at a certain depth, the system shown comprises a mooring unit 50 for mooring the guiding unit at the desired depth. In this exemplary embodiment, said mooring unit 50 comprises a plurality of buoys 51 anchored to the bed of the body of water, which are arranged so that they float at a substantially uniform depth. In this exemplary embodiment, the buoys 51 are attached to the bed of the body of water by cables 52. Guiding units 40 are connected to corresponding buoys 51, so that guiding units 40 are maintained at a substantially uniform depth. In other embodiments, the depth at which the at least one guiding unit 40 is placed may not be uniform (see FIGS. 38 and 39). In other embodiments, the guiding unit 40 can also be placed, at least in part, on the bed of the body of water.

The vessel 1 of this second exemplary embodiment further comprises a reinforcing element 21 of the hydrofoil 20 which is attached to an end or tip of the hydrofoil 20 and to another element of the vessel 1 which provide sufficient strength, in the present exemplary embodiment, the extensions 43. Said reinforcing element 21 prevents, or at least greatly reduces, bending of the tip or distal end of the hydrofoil 20. Such bending could adversely affect the hydrodynamic properties of the hydrofoil 20 and, therefore, should preferably be avoided, as it could adversely affect the propulsion of the vessel 1, and thereby the energy production of the underwater turbines 30.

FIG. 6 shows a front view of the second exemplary of a floating vessel 1 shown in FIGS. 4 and 5 wherein different positions or configurations of the hydrofoil 20 and the support structures 12 are depicted. In particular, FIG. 6 depicts that the hydrofoil 20 of the second exemplary embodiment of a vessel 1 according to the present invention is made of at least two parts joined together in an extensible and contractable manner so that the surface of the hydrofoil 20 can be increased or reduced depending on the needs of the vessel 1 and/or of the system as a whole and/or of the electric grid. In this exemplary embodiment, different parts of the hydrofoil 20 for propelling the vessel 1 are slidably arranged and can move from an extended position to a retracted position, and vice versa. Other embodiments of floating vessels 1 may comprise means for varying the penetration of the hydrofoil 20 in the body of water, by moving the hydrofoil 20 up and/or down relative to the floating vessel 1 and waterline 100, depicted in dotted line.

FIG. 6 also depicts the deployed position of the support structure 12 wherein the underwater turbine 30 is fully submerged in the body of water, i.e., is completely placed below waterline 100, and the resting position in which at least part of the underwater turbine 30 projects above the water surface of the body of water or simply above waterline 100. The deployed position could also be named as the operative position as it is the position in which the underwater turbines 30 operate in a nominal or optimal manner. The resting position eases the maintenance of the underwater turbine 30 as it can be at least partly accessed from above water, avoiding or greatly reducing underwater maintenance, which is difficult, costly and dangerous. The support structure 12 can also be placed in the resting position, for example, when the tides are two strong and could damage the turbine 12 and/or the support structure 12.

FIG. 7 shows a top view of the second exemplary embodiment of a vessel 1 according to the present invention depicting different possible angular positions of the underwater turbines 30 and of the hydrofoil 20 for propelling the vessel 1. Moreover, FIG. 7 also depicts that the hydrofoil 20 of this second exemplary embodiment can modify its shape and, in particular, can modify its radius of curvature, in order to modify its hydrodynamic properties.

As depicted by arrows and dotted lines, each underwater turbine 30 can rotate around an axis of rotation perpendicular to the longitudinal axis of the turbine 30 so that they can be oriented in order to maximize their energy production, for example. Generally speaking, the energy production of the at least one turbine 30 of a floating vessel 1 of a system according to the present invention is maximized when the turbine 30 is oriented so that apparent speed Va of the fluid stream, or simply apparent stream (see FIG. 1), drives it, as the energy production of a turbine is proportional to the fluid speed cubed. However, the at least one turbine 30 of a floating vessel 1 could also be oriented to reduce its energy production if, for example, the electric grid needs less electric energy from the system.

As depicted by arrows, in this exemplary embodiment, the hydrofoil 20 can rotate around its longitudinal axis by rotating the reinforcing elements 13 that connect the hydrofoil 20 with the connecting structure 11. In embodiments where the reinforcing elements 13 are stationary, the hydrofoil 20 can be rotated, for example, by rotatably connecting a shaft of the hydrofoil 20 with the reinforcing elements 13. Preferably, such shaft of the hydrofoil 20 is colinear with its longitudinal axis and is rotatably attached to the centre of the connecting structure, although it could also be rotatably connected in an offset manner.

In order to be able to modify its radius of curvature and thereby modify its hydrodynamic properties and optimise the propulsion of the floating vessel 1, the hydrofoil 20 of this second exemplary embodiment of a floating vessel 1 according to the present invention is made of at least two parts, and in this particular case, four parts, joined together in an articulated manner by an articulated connection. In this exemplary embodiment, all four parts are covered by a single skin, so that the hydrofoil 20 of this second exemplary embodiment has a single continuous surface. In the present exemplary embodiment, said articulated connection is connected to a protruding element 22, which in the present case is in the form of a rod, which is housed in a slidably manner in a corresponding slot 14 in the reinforcing elements 13 (see FIG. 5). By sliding the protruding element 22 in the corresponding slot 14 the shape of the hydrofoil 20 can be changed, thereby modifying its hydrodynamic properties.

By rotating and/or changing the shape of the hydrofoil 20 it is possible to change and adapt its hydrodynamic properties, and in particular, its angle of attack and its lift coefficient.

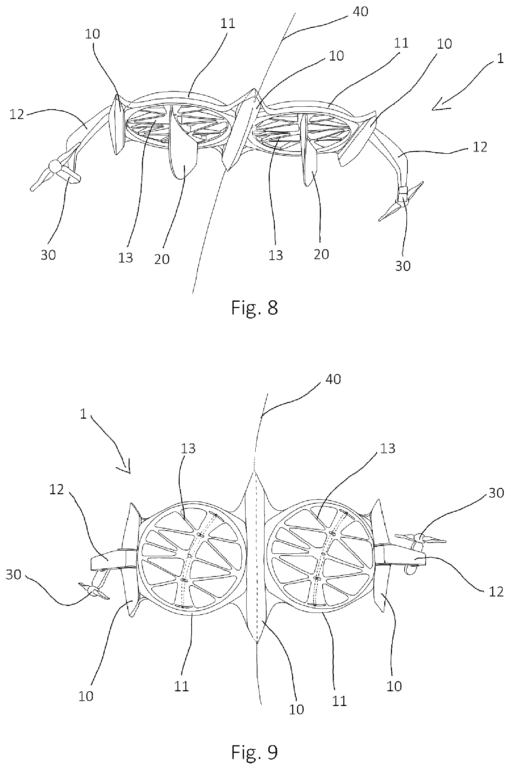

FIGS. 8 and 9 show a bottom perspective view and a top view, respectively, of a third exemplary embodiment of a floating vessel 1 of a system for producing electricity according to the present invention. A difference between this third exemplary embodiment and the first and second exemplary embodiments previously described is that the floating vessel 1 of this third exemplary embodiment comprises three hulls 10 and two hydrofoils 20 for propelling the vessel 1.

Another difference between this third exemplary embodiment and the first and second exemplary embodiments described hereinabove is that in this third exemplary embodiment the central hull 10 slides along the guiding unit 40 which goes through it. The orifices through which the guiding unit 40 enters and/or leaves the hull 10 may comprise friction reduction elements in order to aid in the sliding of the vessel 1. Said friction reduction means can be, for example, rollers. In other similar embodiments, one of the lateral hulls 10 can be the one slidably connected to the guiding unit 40. In case of multiple guiding units 40, multiple hulls 10 can be slidably connected to the corresponding guiding unit 40. In case of multiple guiding units 40, it is also possible that one hull 10 is connected to more than one guiding unit 40.

Similar to the previously described first and second exemplary embodiments, the floating vessel 1 of this third exemplary embodiment also comprises a pair of articulated support structures 12, each one having a corresponding water turbine 30. However, other embodiments of a floating vessel 1 according to the present invention may lack such support structure 12 or said support structure 12 may have a fixed position, that is to say, may not be articulated.

In this third exemplary embodiment each hydrofoil 20 can be adjusted independently in order to optimize the overall performance of the floating vessel 1. The adjustment of the hydrofoil 20 can comprise its rotation or angular position, its length, its curvature, etc. (see, for example, FIGS. 6 and 7). In other embodiments, the adjustment of the hydrofoil 20 depends on the features thereof, as for example, a solid single piece hydrofoil 20 will not be able to adjust its length or its curvature. Although it does not allow such a fine adjustment of its hydrodynamic properties, a simpler hydrofoil 20 has the advantage of reduced cost and reduced maintenance, among others.

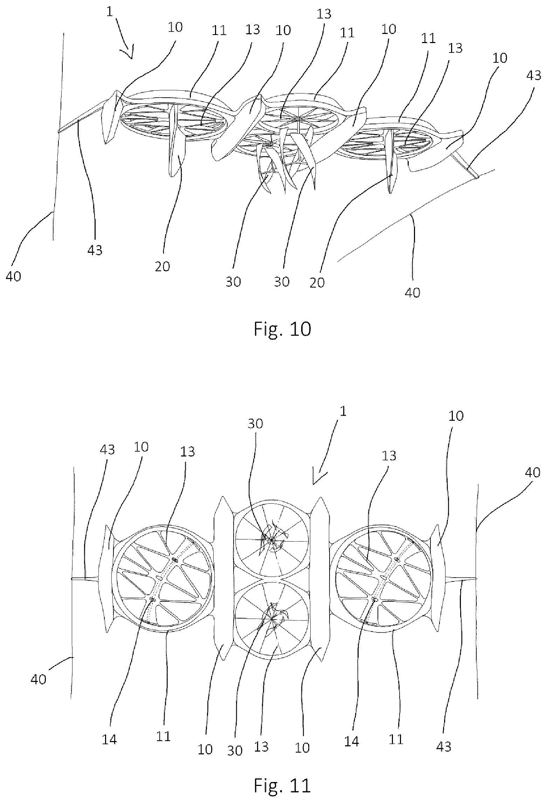

FIGS. 10 and 11 show a bottom perspective view and a top view, respectively, of a fourth exemplary embodiment of a floating vessel 1 of a system for producing electricity according to the present invention. This fourth exemplary embodiment of a vessel 1 comprises four hulls 10 interconnected by corresponding connecting structures 11 and two hydrofoils 20 for propelling the vessel 1, each one being arranged in a corresponding side of the vessel 1. In its central region, the vessel 1 of this fourth exemplary embodiment comprises two vertical axis underwater turbines 30. This is one of the differences between this fourth exemplary embodiment and the previously described ones, as the first, second and third exemplary embodiments comprise horizontal axis underwater turbines 10. Each vertical axis turbine 30 of this fourth exemplary embodiment is supported by corresponding reinforcing elements 13 connected to the central connecting structure 11.

Similar to the second exemplary embodiment shown in FIGS. 4 and 5, this fourth exemplary embodiment is configured to be used in a system according to the present invention comprising two guiding units 40 arranged facing one another on opposite sides of the vessel 1. In this exemplary embodiment, the vessel 1 comprises two extensions 43 on opposite ends thereof slidably connected to the corresponding guiding unit 40. However, other arrangements to connect the vessel 1 to the guiding unit 40 could also be used, for example, the ones described in the context of FIGS. 2 to 9. The fourth exemplary embodiment comprises two hydrofoils 20 for propelling the vessel 1, as the third exemplary embodiment previously shown. Likewise, each hydrofoil 20 can be adjusted independently one another or both can be adjusted synchronously, i.e., the same adjustment takes place on both hydrofoils 20 at the same time.

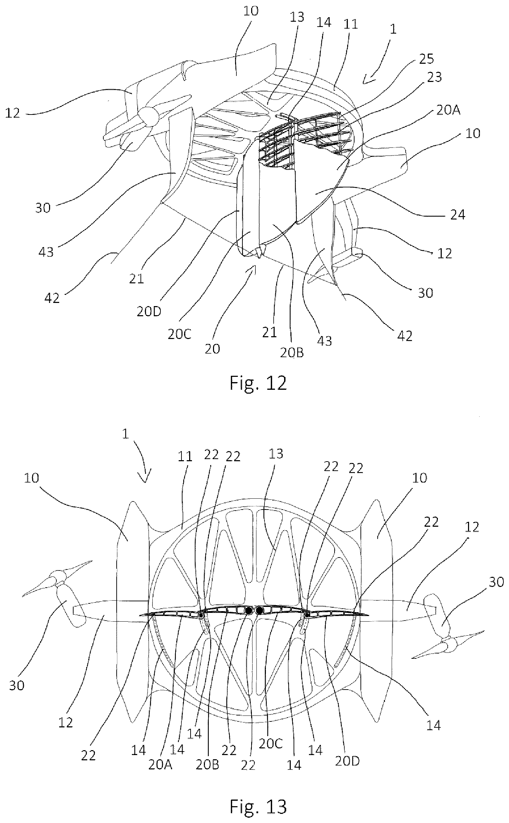

FIG. 12 shows a bottom perspective view of a fifth exemplary embodiment of a floating vessel 1 of a system for producing electricity according to the present invention. This fifth exemplary embodiment is similar to the second exemplary embodiment shown in FIGS. 4 and 5, but the hydrofoil 20 is different. In this fifth exemplary embodiment the hydrofoil 20 comprises a group of four hydrofoil segments 20A, 20B, 20C, 20D being configured to act or perform as a single hydrofoil 20, each segment 20A, 20B, 20C, 20D being slidably connected to reinforcing elements 13 operatively connected to the connecting structure 11. In FIG. 12 the hydrofoil segments 20A, 20B have been depicted, for illustrative purposes, with its skin 24 partially removed. However, it should be understood that in this fifth exemplary embodiment each hydrofoil segment 20A, 20B, 20C, 20D is actually surrounded by its corresponding skin 24 which defines the external surface of the corresponding hydrofoil segment 20A, 20B, 20C, 20D. In order to provide structural integrity, each hydrofoil segment 20A, 20B, 20C, 20D of this exemplary embodiment comprises a plurality of ribs 23 interconnected by a plurality of stringers 25. The aforementioned structure of the hydrofoil segments 20A, 20B, 20C, 20D is substantially similar to the one of a wing of a plane. Although this structure of ribs 23, stringers 25 and skin 24 has been described in the context of the fifth exemplary embodiment, it can also be employed in hydrofoils as the one described in the context of the first, second, third and fourth exemplary embodiments, i.e., this structure can also be employed in hydrofoils 20 comprising a single continuous external surface, among others.

Similarly to what has been described in the context of FIG. 7, in this fifth exemplary embodiment each hydrofoil segment 20A, 20B, 20C, 20D comprises at least one protruding element 22 received in a slidable manner in a corresponding slot 14 in the reinforcing elements 13. Although a single protruding element 22 for each hydrofoil segment 20A, 20B, 20C, 20D would suffice, in this exemplary embodiment each hydrofoil segment 20A, 20B, 20C, 20D comprises two protruding elements 22, each one received in a slidable manner in a corresponding slot 14 in the reinforcing element 13. In particular, in this fifth exemplary embodiment, a first protruding element 22 is arranged at one end of the hydrofoil segment 20A, 20B, 20C, 20D and a second protruding element 22 is arranged at the opposite end of the hydrofoil segment 20A, 20B, 20C, 20D following a transversal direction. This arrangement with two protruding elements 22 for each hydrofoil segment 20A, 20B, 20C, 20D provides an increased structural integrity and greater stiffness of each hydrofoil segment 20A, 20B, 20C, 20D.

In order to further increase the structural integrity of the hydrofoil 20, and in particular, of each of the central hydrofoil segments 20B, 20C, the vessel 1 further comprise a corresponding reinforcing element 21 which connects the bottom end or tip of the central hydrofoil segments 20B, 20C with another element of the vessel 1, which in the present case, is an extension 43, and in particular, with the lowermost tip of the corresponding extension 43. However, in other embodiments the reinforcing element 21 can be connected to other parts of the extension 43 or of the vessel 1. It is also possible that, in other embodiments, the vessel 1 comprises a reinforcing element 21 for each hydrofoil segment 20A, 20B, 20C, 20D.

As can be seen, similar to the second exemplary embodiment previously shown, the vessel 1 of this fifth exemplary embodiment also comprises two connection cables 42 slidably connected to a corresponding guiding unit 40 (not shown) and to a corresponding extension 43 of a corresponding hull 10. Said connection of the connection cables 42 to the guiding unit 40 is preferably done by a traveller 41.

FIGS. 13 to 15 show, in a top view, a first, a second and a third configuration, respectively, of the fifth exemplary embodiment of a vessel 1 of a system according to the present invention shown in FIG. 12. It should be noted that these different configurations are only for illustrative purposes and that the hydrofoil segments 20A, 20B, 20C, 20D acting as a single hydrofoil 20 of this fifth exemplary embodiment could achieve a greater number of different configurations, depending, for example, on fluid stream speed, propulsion needs of the vessel 1, etc.

The different configurations shown of the hydrofoil segments 20A, 20B, 20C, 20D are achieved, in this exemplary embodiment, by sliding the protruding elements 22 of each hydrofoil segment 20A, 20B, 20C, 20D along the corresponding slot 14 in the reinforcing elements 13. However, in other embodiments of a vessel 1 of a system according to the present invention, the hydrofoils segments 20A, 20B, 20C, 20D may be connected to the vessel 1 in a different manner.

Although each hydrofoil segment 20A, 20B, 20C, 20D can be regulated individually, in each configuration they are regulated or configured as to function as a single hydrofoil 20.

In the first configuration, i.e., the one shown in FIG. 13, all hydrofoil segments 20A, 20B, 20C, 20D are aligned substantially parallel to the direction of the fluid stream so that the hydrofoil 20 defined by the hydrofoil segments 20A, 20B, 20C, 20D has a lift coefficient close to zero. In this configuration the floating vessel 1 is heaving to so as to reduce, or even stop, the forward movement of the vessel 1. It may be desirable that the floating vessel 1 heavens to, for example, in case of heavy storms, maintenance operations, transfer of energy stored in the vessel 1, etc.

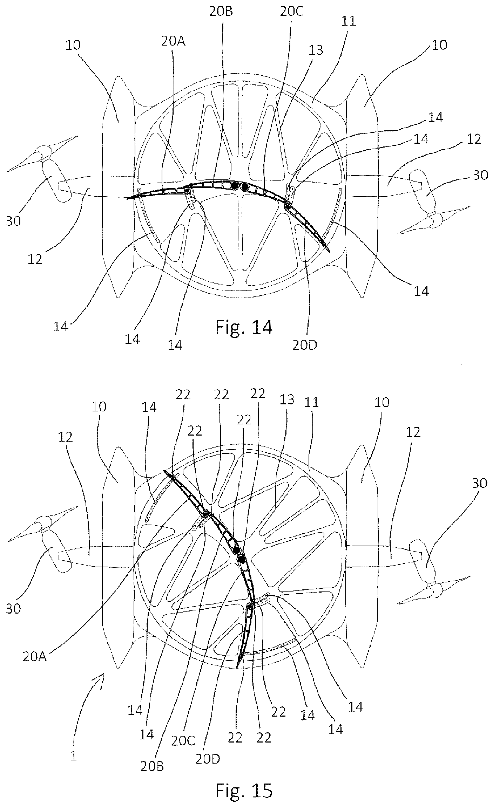

FIG. 14 shows a second configuration of the hydrofoil 20 wherein the group of hydrofoil segments 20A, 20B, 20C, 20D define an asymmetric foil profile. Departing from the first configuration shown in FIG. 13, this second configuration can be reached by moving the protruding elements 22 along the corresponding slots 14 present in the reinforcing elements 13, so that the lift/drag coefficient of the hydrofoil 20 changes.

In this second configuration of the hydrofoil 20 a channel effect can be produced in the gap between adjacent hydrofoil segments 20A, 20B, 20C, 20D so that the force generated by the hydrofoil 20 is greater than the sum of the forces that each hydrofoil segment 20A, 20B, 20C, 20D would generate independently.

The third configuration shown in FIG. 15 is reached by rotating, i.e., by changing the angular position, of the hydrofoil 20 by rotating the reinforcing elements 13 relative to the connecting structure 11. By rotating the hydrofoil 20 it is possible to change its angle of attack and, therefore, to change its hydrodynamic properties.

The five exemplary embodiments of a floating vessel 1 described above can use at least one of the electricity transferring means, which will be described hereinbelow, to transport electricity generated by the at least one generator of each floating vessel 1 to the at least one power line 80 for transmitting the electric energy produced by the system to an external electrical network or to an external consumer. It is also possible that a single floating vessel 1 comprises more than one electricity transferring means, thereby providing redundancy.

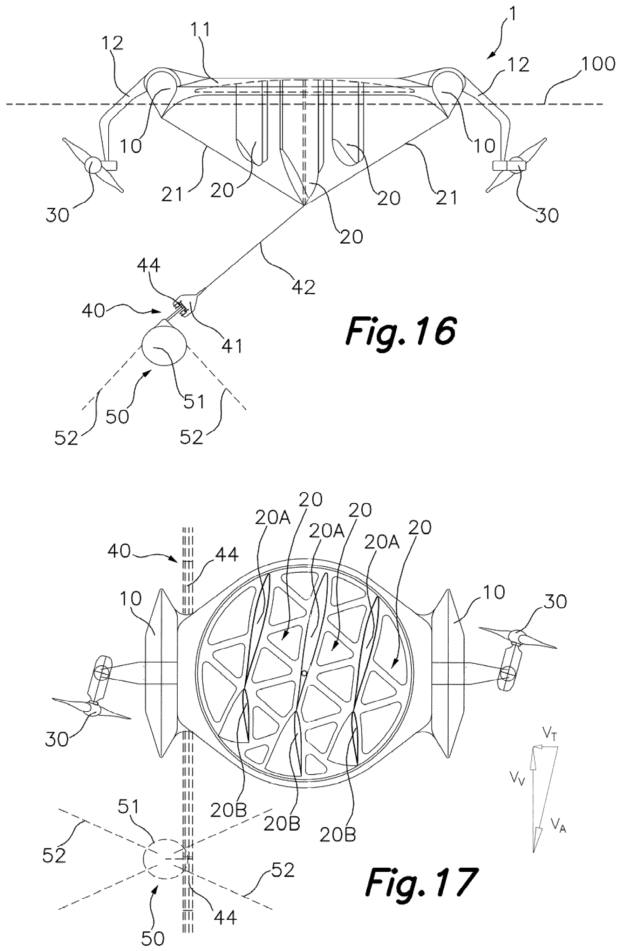

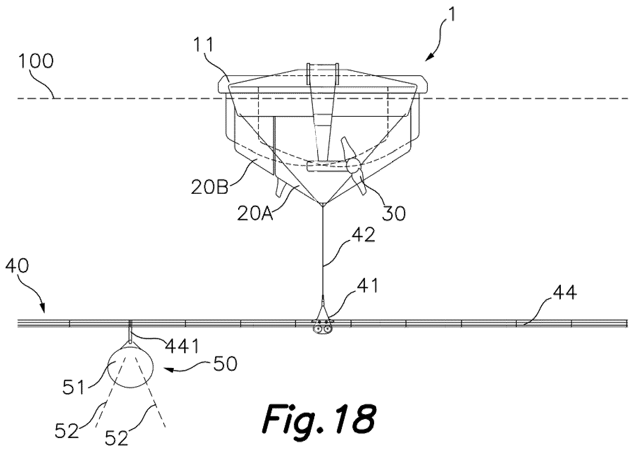

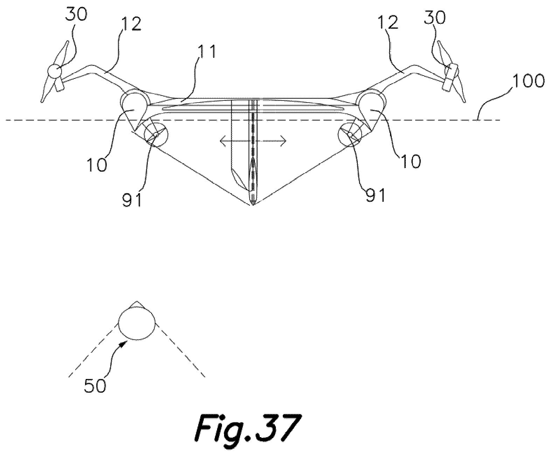

FIGS. 16 to 18 show a partial front, top and side view of a second exemplary embodiment of a system for producing electricity from a fluid stream in a body of water according to the present invention. In this exemplary embodiment, the floating vessel 1 shown comprises three hydrofoils 20, each hydrofoil comprising a first segment 20A and a second segment 20B, operatively connected to the reinforcing elements 13 that are rotatable relative to the connecting structure 11. In the exemplary embodiment shown, the first hydrofoil segment 20A of each hydrofoil 20 has a fixed orientation relative to the reinforcing elements 13, but as said reinforcing element 13 can rotate, the first hydrofoil segments 20A, and the hydrofoil 20, can also rotate in order to modify its angle of attack of the fluid stream. The second hydrofoil segment 20B of each hydrofoil 20 can swing in order to modify the shape of the corresponding hydrofoil 20, and thus, modify its hydrodynamic properties. This is also useful when it is desired that the hydrofoil 20 act as a rudder (see FIG. 37). In this exemplary embodiment the second hydrofoil segments 20B swing around an axis located at its proximal end to the first hydrofoil segment 20A.

The floating vessel 1 of this exemplary embodiment is slidably connected to the guiding unit 40, which comprises a track 44, via a traveller 41 sliding along said guiding unit 40. Said traveller 41 is operatively connected to the floating vessel 1 by a connecting cable 42.

In the exemplary embodiment shown, the system also comprises a mooring unit 50 of the guiding unit 40 for mooring said guiding unit 40 at a predetermined depth below waterline 100, so that the guiding unit does not interfere with marine traffic. This also reduces the visual impact of the system object of the present invention, among other benefits. In the embodiment shown, the mooring unit 50 comprises a buoy 51 which is anchored to the bed of body of water by multiple cables 52. In other embodiments said mooring unit 50 may be different.

Other floating vessels 1 of this system may be similar to the one shown in FIGS. 16 to 18 or be different.

In FIG. 17 it has also been depicted the triangle of velocities of the fluid stream, wherein Vt depicts the real speed of the fluid stream, Vv is the relative speed of the fluid stream due to the advance speed of the vessel 1, and Va is the apparent speed of the fluid stream, which drives the underwater turbines 30. In FIG. 17 the underwater turbines 30 are oriented in order to maximize its energy production. However, depending on the needs, the underwater turbines 30 may be oriented in any other way.

FIG. 19 shows a front view of a traveller 41 of the second exemplary embodiment of a system for producing electricity shown in FIGS. 16 to 18. However, said traveller 41, and variations of the same, can also be found in other embodiments of the present invention.

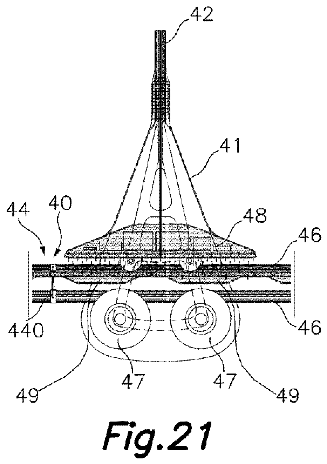

The traveller 41 shown is operatively connected to the corresponding floating vessel 1 by a connecting cable 42 (see, for example, FIG. 16) that comprises an electrical cable for transmitting the electric energy generated by the at least one generator of the corresponding floating vessel 1 to at least one electromagnetic emitter 48 comprised in the traveller 41. The at least one electromagnetic emitter 48 can further comprise at least one electrical transformer and electronic components for adjusting the frequency of the electric current to the frequency of the emitter. The frequency of the emitter is one that maximizes the efficiency of the wireless energy transfer between the emitter 48 and the receiver 49. Typically, alternating current produced by the at least one generator of each floating vessel 1 is transformed to direct current and is subsequently transformed to alternating current to generate the electromagnetic field necessary for the wireless energy transfer between the emitter 48 and the receiver 49. This traveller 41 also comprises two pairs of groups of rollers 47, each roll being configured to roll along a corresponding guide element 46 of a track 44 of a guiding unit 40 (see, for example, FIG. 20). In the exemplary embodiment shown, each group of rollers 47 comprises two rollers 47 arranged longitudinally on the traveller 41 (see FIG. 21).

FIG. 20 shows a cross section of the guiding unit 40 of the second exemplary embodiment of a system for producing electricity shown in FIGS. 16 to 20. In this embodiment, the guiding unit 40 comprises a track 44, which in turn comprises two pairs of guide elements 46 that guide the traveller 41 along the closed loop path defined by the guiding unit 40. In this exemplary embodiment, it can be seen a separator 440 configured to increase the structural integrity of the track 44 and to support one or more electromagnetic receivers 49. The second embodiment of a system according to the present invention comprises a plurality of such separators 440 spaced apart along the entire closed loop path defined by the guiding unit 40.

In dotted lines it is also depicted the mooring unit 50 of this second exemplary embodiment comprising a plurality of buoys 51 anchored to the bed of the body of water by cables 52. Although only one buoy 51 and corresponding cables 52 is depicted in FIG. 20, the mooring unit 50 of said second exemplary embodiment comprises a plurality of such buoys 51 and corresponding cables 52 spaced apart along the guiding unit 40. Said mooring unit 50 is connected to the guiding unit 40 by a connector 441 that mechanically links the track 444 with the buoy 50.

FIG. 21 shows a side schematic view of a detail of the second exemplary embodiment of a system for producing electricity shown in FIGS. 16 to 20 and, in particular, shows the traveller 41 shown in FIG. 19 mounted on the guiding element 40 shown in FIG. 20. As can be seen, each group of rollers 47 is configured to roll along the guide elements 46 of the track 44. In this exemplary embodiment, each group of rollers 47 comprises two rollers 47, although other embodiments could comprise more rollers 47. Moreover, in other embodiments a single roller 47 for each guide element 46 could suffice. In particular, the traveller shown 41 comprises eight rollers 47, two for each guide element 46 of the track 44 of the guiding unit 40. This arrangement provides for a secure and stable coupling of the traveller 41 to the guiding unit 40.

As can be seen in FIG. 21, when the traveller 41 is coupled to the track 44 of the guiding unit 40, the electromagnetic emitter 48 comprised in the traveller and the electromagnetic receivers 49 comprised in the track 44 are arranged substantially parallel one another spaced apart at a certain distance. The separation between the electromagnetic emitter 48 of the traveller 41 and the electromagnetic receivers 49 is sufficient to avoid any risk of rubbing between them but it is close enough so that the electromagnetic transmission of power between the emitter 48 and the receivers 49 is not affected. Said transmission of electric energy between the emitter 48 and the receivers 49 is illustrated in FIG. 21 with dotted lines arranged perpendicular to said elements.

The plurality of electromagnetic receivers 49 is electrically connected to the at least one power line 80.

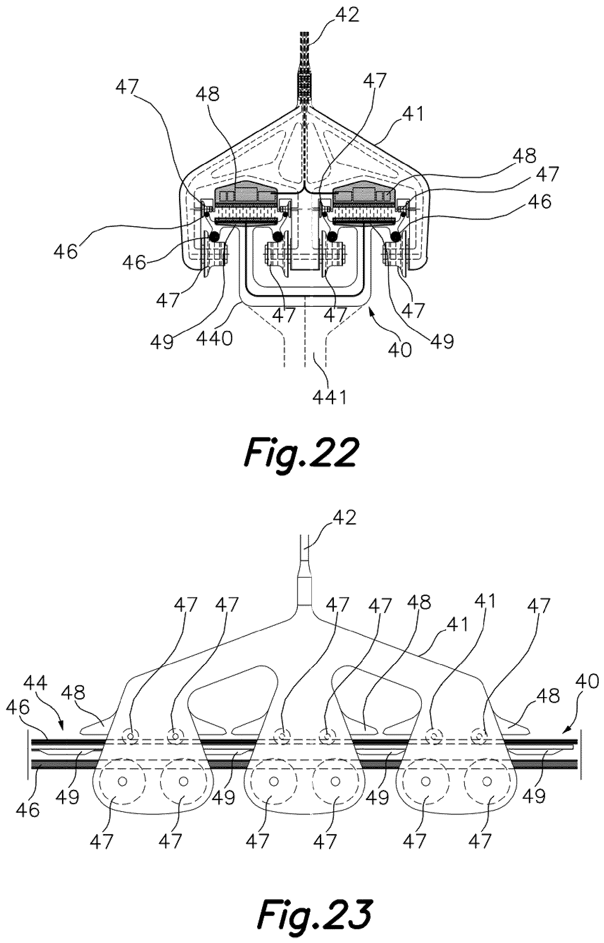

FIGS. 22 and 23 show a front and a side view of a guiding unit 40 and a traveller 41 of a third exemplary embodiment of a system for producing electricity according to the present invention. The guiding unit 40 of this third exemplary embodiment comprises two pairs of tracks 44 or a double track 44, wherein most of the elements previously described in the context of FIGS. 20 and 21 are multiplied. In particular, the double track 44 of the guiding unit 40 of this third exemplary embodiment comprises four pairs of guide elements 46 and the traveller 41 comprises corresponding four pairs of groups of rollers 47. In this case, each group of rollers 47 comprises six rollers 47 arranged longitudinally on the traveller 41. The traveller 41 shown comprises six electromagnetic emitters 48, three for each track 44, thereby increasing the transmission power between the traveller 41 and the guiding unit 40, as the surface of electromagnetic emitters 48 facing the electromagnetic receivers 49 of the track 44 is also increased.

The relative arrangement of the guide elements 46, rollers 47, electromagnetic emitters 48, electromagnetic receivers 49, etc., of this third exemplary embodiment is substantially equivalent to the one of the second exemplary embodiment previously shown, taking into account the differences due to having a different number of such elements.

A benefit of the travellers 41 and guiding element 40 of this third exemplary embodiment in comparison with the second one, is that the mechanical robustness of the coupling and the power transmission between the traveller 41 and the guiding element 40 is increased.

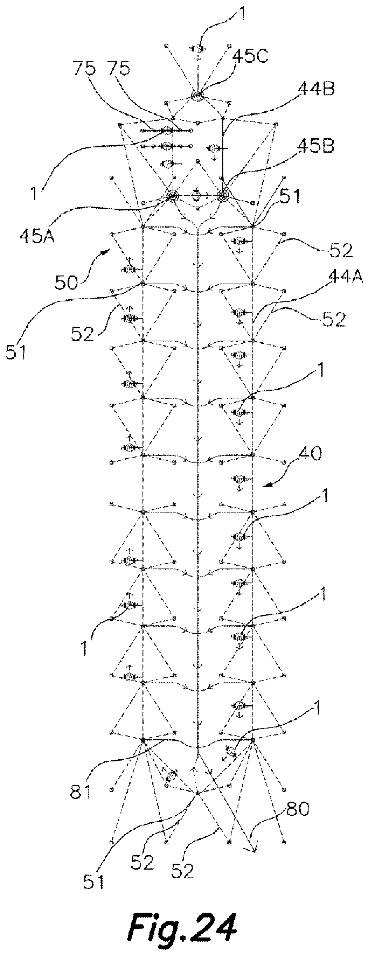

FIG. 24 shows a top schematic view of a fourth exemplary embodiment of a system for producing electricity from a fluid stream in a body of water according to the present invention. The embodiment shown comprises a plurality of floating vessels 1 travelling along the guiding unit 40 defining a closed loop path. Said guiding unit 40 comprises a first track 44A and a second track 44B, wherein the first track 44A defines the closed loop path along which the floating vessels 1 travel to generate electricity with its at least one generator driven by its one or more underwater turbines 30 and the second track 44B is used to perform maintenance operations to the floating vessels 1 that need them. It should be noted that without said auxiliar or second track 44B, in order to perform maintenance operations to one or more floating vessels 1, the whole system would need to be stopped, as otherwise the following floating vessel 1 would collide with the one or more floating vessels 1 stopped to be maintained or repaired. Although some maintenance or repair operations could be possible to perform with the floating vessel 1 in motion, this should be avoided as it greatly increases the risk of injury for the one or more technicians carrying out the maintenance and/or repair operations.

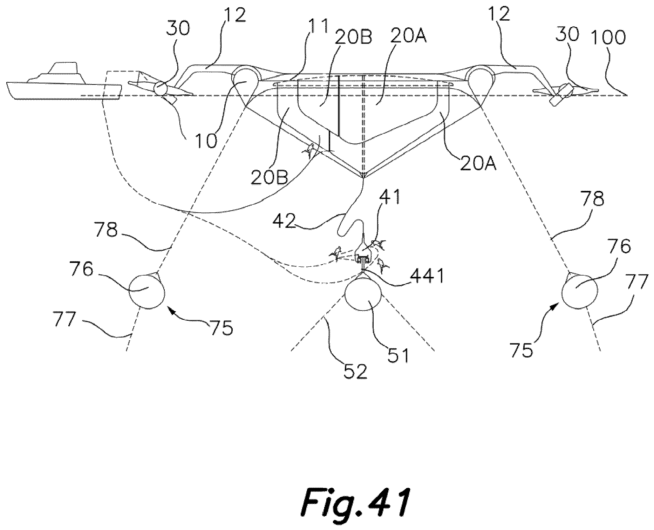

In order to ease the maintenance operations, the system comprises multiple auxiliar mooring units (see FIG. 41).

In order to direct the floating vessels 1 to the auxiliar or second track 44B or to maintain them at the first track 44A, the system comprises a first switch 45A. The system further comprises a second switch 45B to allow or block the return of one or more floating vessels at the second track 44B to the main or first track 44A. Said second switch 45B is also configured to not interrupt the main or first track 44A so that the floating vessels 1 can keep travelling along the closed loop path it defines generating electricity.

Additionally, the fourth exemplary embodiment shown comprises a third switch 45C which is configured to allow introduction and/or removal of floating vessels from said auxiliar or second track 44B. In order to do so, besides allowing circulation of the floating vessels 1 along the second track 44B, the third switch 45C also opens the path to the body of water, so that floating vessels 1 can be removed or introduced to the system. Floating vessels 1 can be towed to the location of the system or can be self-propelled, for example, by using an auxiliar propelling unit 91 (see FIG. 37). The same applies to floating vessels 1 that exit the system.

In order to transfer the electricity generated by each floating vessel 1 to the power line 80 electrically connected to an external electrical network or to an external consumer, the system of this fourth exemplary embodiment comprises wireless electricity transmitting means similar to the ones described in the context of FIGS. 19 to 23. This fourth exemplary embodiment comprises multiple auxiliar power lines 81 electrically connected to the at least one power line 80 for transmitting the electric energy produced by the system to an external network or an external consumer. Each auxiliar power line 81 is configured to transmit to the power line 80 electricity received from a group of electromagnetic receivers 49 from the electromagnetic emitters 48 passing over said group of electromagnetic receivers 49.

The mooring unit 50 of the guiding unit 40 of this fourth exemplary embodiment comprises a plurality of buoys 51 arranged spaced apart along the first and second track 44A, 44B, each buoy 51 anchored to the bed of the body of water by cables 52. In other embodiments said mooring unit 50 may be different.

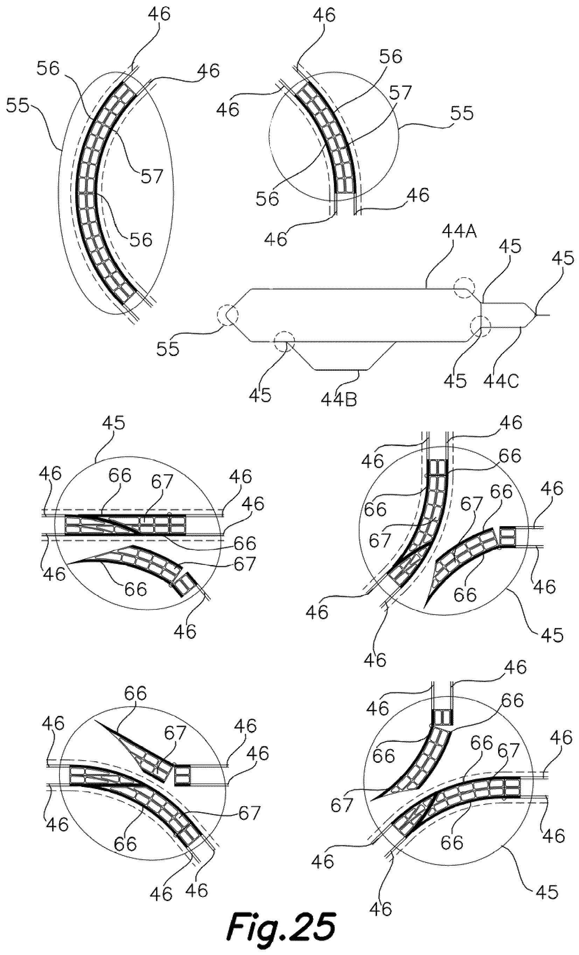

FIG. 25 shows a top schematic view of a fifth exemplary embodiment of a system for producing electricity from a fluid stream in a body of water according to the present invention and several detail views of different parts of said fifth exemplary embodiment, in particular, curved sections 55 and switches 45 of the different tracks 44A, 44B, 44C defining the guiding unit 40 of the system shown.

This fifth exemplary embodiment comprises a main track 44A defining the closed loop path along which the floating vessels 1 (not shown) move while generating electric energy and two maintenance and/or parking tracks 44B, 44C diverging from the main track 44A. Both maintenance and/or parking tracks 44B, 44C later converge, i.e. return, to the main track 44A.

In order to direct the floating vessels 1 to one track 44A, 44B, 44C or another, the system comprises multiple track switches 45. Said switches 45 are substantially similar in concept to railroad switches. The switches 45 of this exemplary embodiment comprise articulated switch blades 66 that are strengthen by reinforcements 67 as said switch blades 66 have to withstand high mechanical stress. Said switch blades 66 are made of a rigid tubular material and are aligned with the corresponding guide elements 46 of the track 44A, 44B, 44C.

As can be seen, the closed looped path defined by the main track 44A comprises relatively tight turns. In said tight turns, this exemplary embodiment comprises curved sections 55 of the track 44A formed by curved guide elements 56 made of a rigid tubular material reinforced with structural reinforcements 57 as the mechanical stresses that the curved sections 55 have to withstand are greater than the straight sections of the main track 44A. Said curved guide elements 56 are aligned with the guide elements 46 of the corresponding track 44A, 44B, 44C.

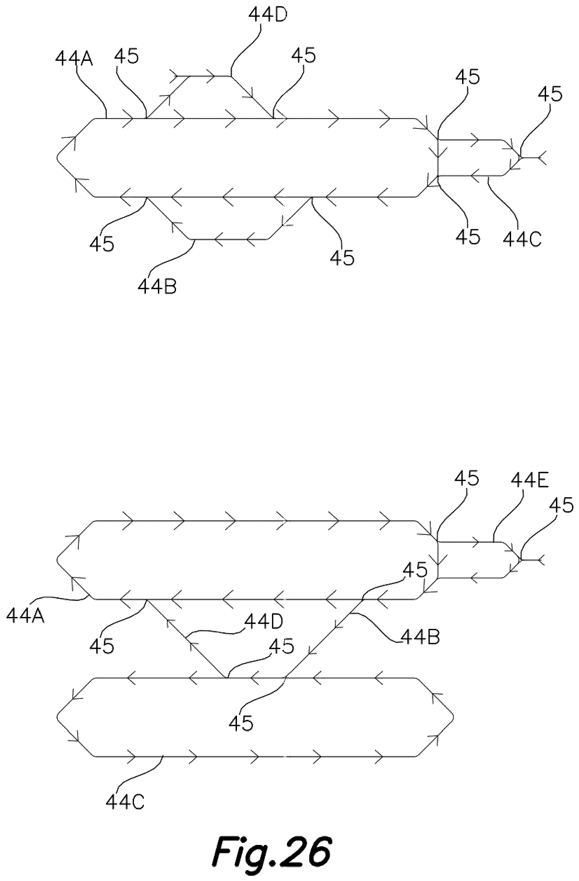

FIG. 26 shows a top schematic view of a sixth and a seventh exemplary embodiment of a system for producing electricity from a fluid stream in a body of water according to the present invention.

The sixth exemplary embodiment, depicted in the upper part of FIG. 26, is similar to the fifth exemplary embodiment shown in FIG. 25, but with an additional parking and/or maintenance track 44D.

One or more robots (not shown) can be parked in either of the parking and/or maintenance tracks 44B, 44D. Said robots are configured to perform maintenance and or repairing tasks with the system in operation. This maintenance tasks can be, for example, cleaning the tracks 44A so that the wireless electric energy transmission between the emitters 48 and the receivers 49 is not hindered by algae, etc. deposited on its surface. Said robots can also perform inspection operations, for example, looking for cracks, etc. in the track 44A. The robots are electrically powered and can be charged with the electric energy generated by the system while they are parked in the parking and/or maintenance tracks 44B, 44D.

The seventh exemplary embodiment, depicted in the lower part of FIG. 26, comprises two main tracks 44A, 44C, each one defining a closed loop path, along which the floating vessels 1 (not shown) move in order to generate electricity with their underwater turbines 30 and their generators. Both main tracks 44A, 44C are interconnected by connection tracks 44B, 44D diverging from one of the main tracks 44A, 44C and converging to the other main track 44A, 44C. The main track 44A further comprises a parking and/or maintenance track 44E, similar to the one described, for example, in the context of FIG. 24.

One of the benefits of having two main tracks 44A, 44B is that the floating vessels 1 moving along them may move at different speeds, and thus, produce different power, depending on the needs of the system and of the electric grid.

The aforementioned different layouts of guiding units 40 of systems according to the present invention are simply examples, and other embodiments of the present invention can have different layouts than the ones shown.

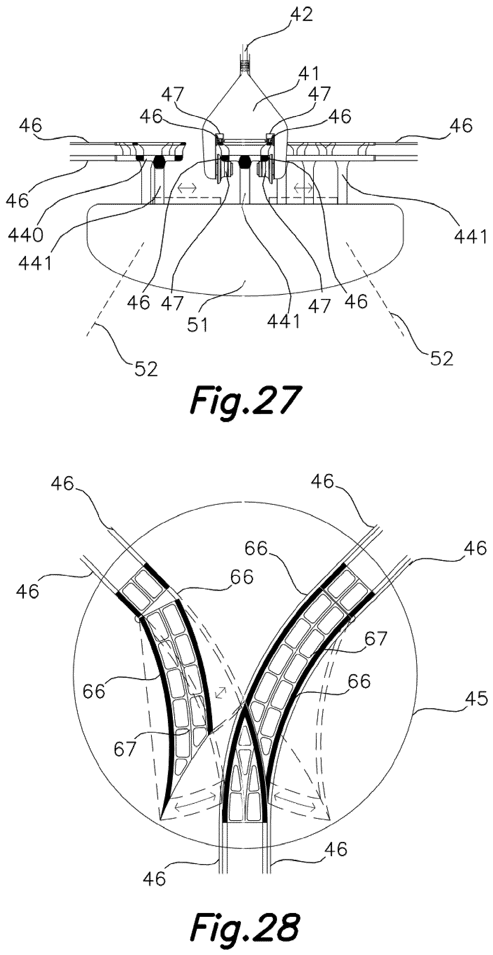

FIGS. 27 and 28 shows a top and a front view of an exemplary embodiment of a switch 45 of a system for producing electricity from a fluid stream in a body of water according to the present invention. The switch 45 shown is supported by a buoy 51 of the mooring unit 50 of the guiding unit 40 of the system. In particular, the elements of the switch 45 are connected to the buoy 51 by connectors 41 attached to separators 440 and to the buoy 51, which is anchored to the bed of the body of water by cables 52. In order to increase the structural integrity of the ensemble, all elements of a switch 45 are preferably connected to a single buoy 51, as in the case shown in FIGS. 27 and 28.

As can be seen, the switch blades 66 swing thereby defining the path that will follow the floating vessel 1 slidably connected to the track 44.

As the switch blades 66 have to withstand high mechanical stress they are made of rigid tubular material, but the guide elements 46 of the track, which are typically substantially straight, can be made of tensioned cable, which aids in its deployment. In order to perform the turn, the switch blade 66 needs to be curved, and it is not possible to do a curved path with a tensioned cable. With a tensioned cable a curve has to be divided in multiple straight segments, and with multiple straight segments the switch blade 66 would not be able to carry out its function.

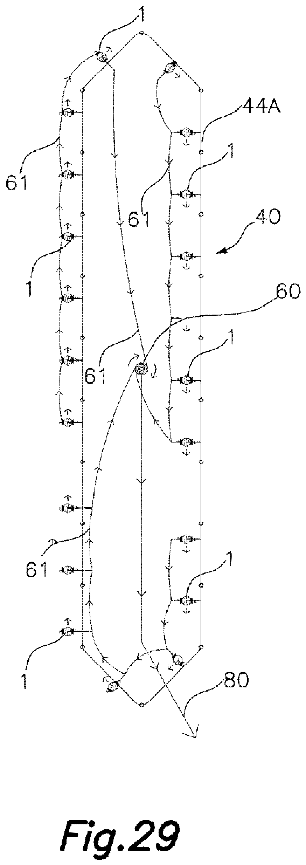

FIG. 29 shows a top schematic view of an eighth exemplary embodiment of a system for producing electricity from a fluid stream in a body of water according to the present invention. Essentially this eighth exemplary embodiment differs from the fourth exemplary embodiment shown in FIG. 24 in that the guiding unit 40 comprises a single track 44A and in that it lacks the wireless energy transmission means. In order to transfer the electric energy generated by the floating vessels 1, this exemplary embodiment comprises one spool 60 located within the closed loop path defined by the guiding unit and being electrically connected to the at least one power line 80 and to the floating vessels 1 by three electrically conducing cables 61 configured to be wound and unwound on said spool 60 as the plurality of floating vessels 1 move along the guiding unit 40. As can be seen, even if this system only comprises three electrically conducting cables 61, all floating vessels 1 are electrically connected to the spool 60 as each conducting cable 61 is electrically connected to a plurality of floating vessels 1. The same electrically conducting cable 61 can go from the spool to one floating vessel 1 to the other until it reaches the final floating vessel 1 of the group or can have multiple branches, one for each floating vessel 1, deriving from the corresponding electrically conducting cable 61. Both alternatives are depicted in FIG. 29.

Other embodiments, similar to this one, can comprise a different number of electrically conducting cables 61, for example, a single one could suffice, or one for each floating vessel 1.

This ninth embodiment comprises a guiding unit 40 having a track 44 similar to the one described in the context of FIGS. 20 and 21, but without the electromagnetic receiver 49.

However, in other embodiments said guiding unit 40 may comprise, for example, a guide cable similar to what is shown in FIG.4 and 5 or any other suitable guiding unit. Said guiding unit 40 could also comprise a track 44 with wireless power transmitting means as the wireless power transmitting means and the spool 60 with one or more electrically conducting cables 61 are not mutually exclusive. Being able to transmit the electricity generated by the floating vessels 1 to the power line 80 with different alternatives within the same system, provides redundancy, which is an appreciated feature in power generation.

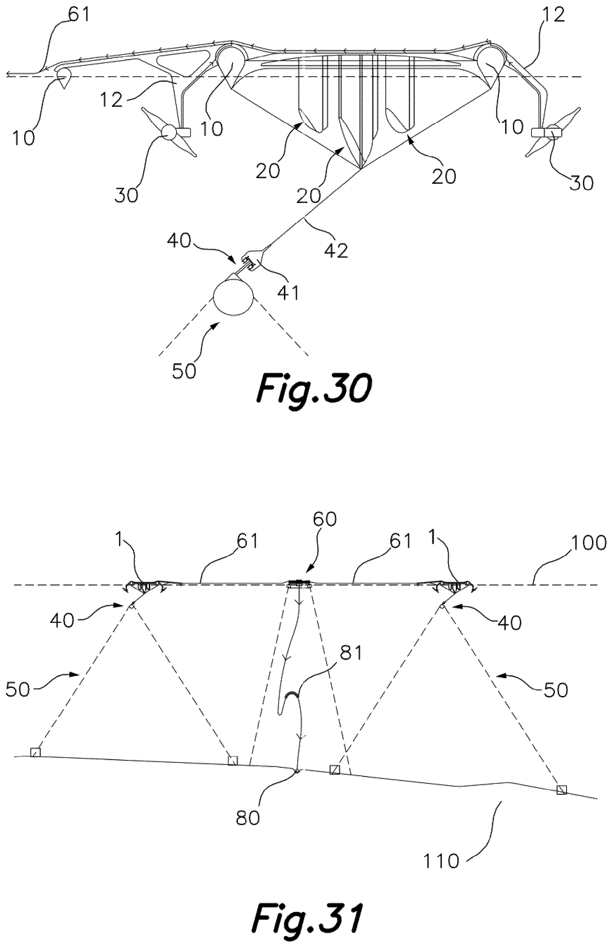

FIGS. 30 and 31 show a front detail view and a side view, respectively, of the eighth exemplary embodiment of a system for producing electricity shown in FIG. 29. In this exemplary embodiment the floating vessel 1 comprises an auxiliar hull 10 attached to the support structure 12 of one of the underwater turbines 30 of the floating vessel 1. Said support structure 12 guides the electrically conducting cable 61 towards the spool 60. The floating vessels 1 in this exemplary embodiment are slidably connected to the guiding unit 40 by a traveller 41.

FIG. 31 shows the auxiliar power line 81 that electrically connects the spool 60 with the power line 80 for transmitting the electric energy produced to an external network or an external consumer. Said power line 80 rests on the bed 110 of the body of water. It is also depicted the mooring unit 50 of the guiding unit 40 that is anchored to the bed 110 of the body of water as the spool 60.

Each electrically conducting cables 61 enter to the spool 60 via a corresponding opening thereof that rotates together with the electrically conducting cable 61 and the corresponding floating vessels 1.

Other similar embodiments may comprise more than one spool 60, preferably one on top of the other, so that each spool 60 can be rotated following the corresponding electrically conducting cables 61 as the corresponding vessels 1 move along the closed loop path.

In other embodiments having more than one spool, it is also possible to arrange them one next to the other, at the same height, in which case all spools need to be able to turn following the floating vessels 1 in order to prevent the electrically conducting cables 61 to wrap around each other.

In embodiments having more than one electrically conducting cables 61, the one or more spools 60 are configured so that each electrically conducting cable 61 can be wound and/or unwound from the spool 60 separately from the other electrically conducting cables 61.

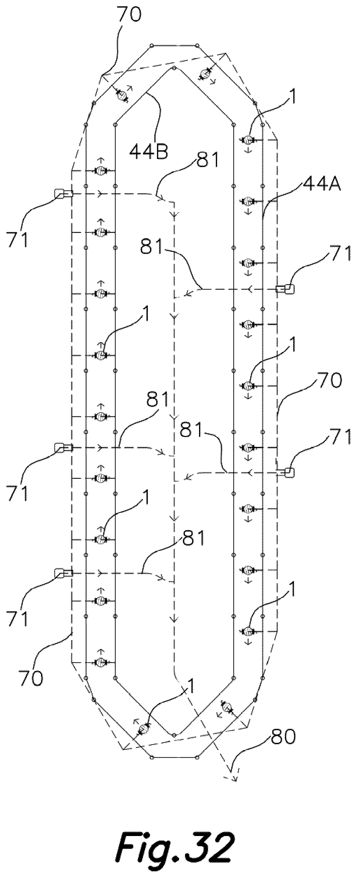

FIG. 32 shows a top schematic view of a ninth exemplary embodiment of a system for producing electricity from a fluid stream in a body of water according to the present invention.

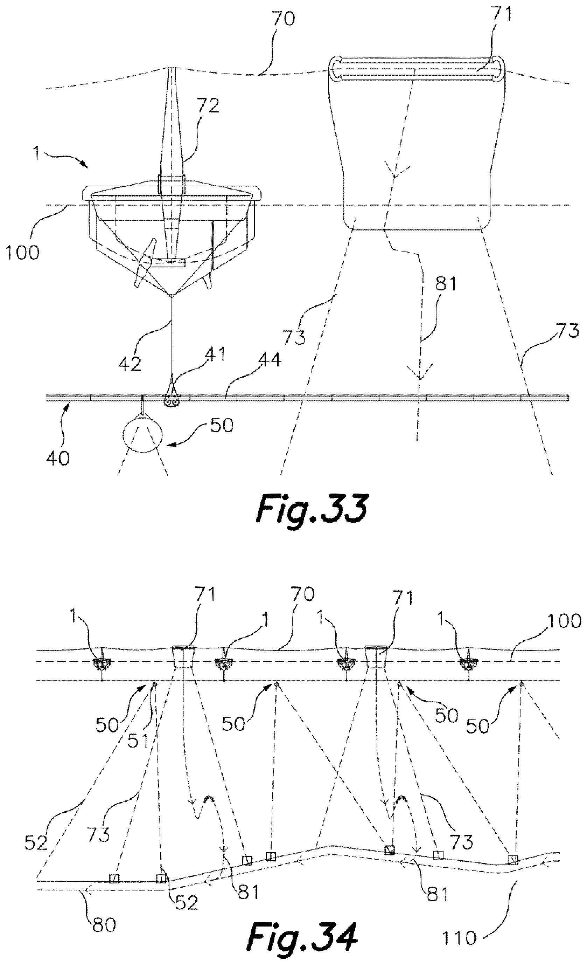

In this ninth exemplary embodiment the floating vessels 1 are electrically connected to the power line 80 by an interconnecting cable 70, which is electrically connected to the at least one generator of each floating vessel 1 and elevated at a certain height above waterline 100 by an elevating structure 72 (see FIG. 33) of each floating vessel 1. The system of this ninth exemplary embodiment further comprises a plurality of electricity collection units 71, arranged spaced apart along the closed loop path defined by the guiding unit 40, which are electrically connected to the interconnecting cable 70 and to the power line 80, in the latter case by a corresponding auxiliar power line 81.

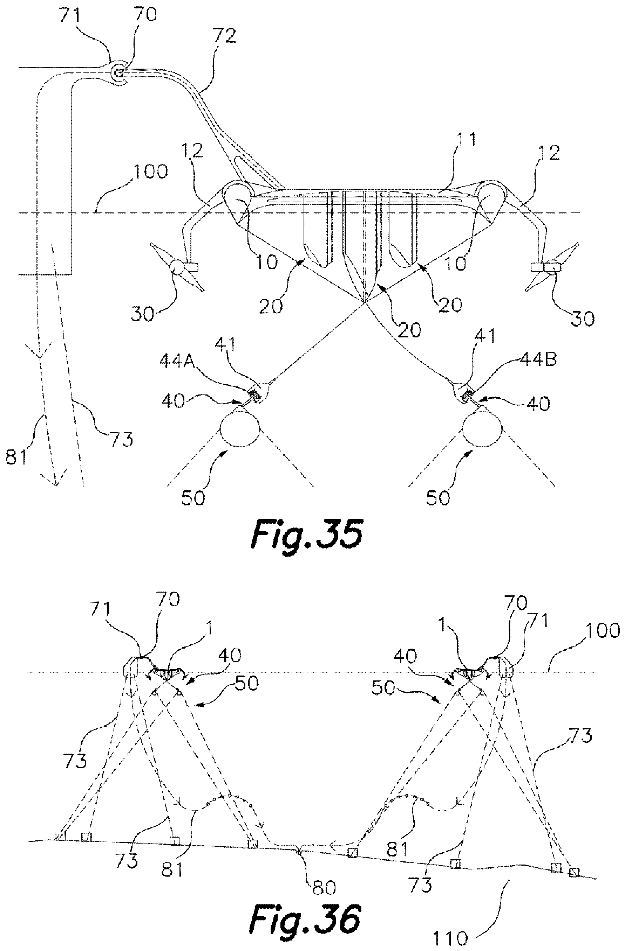

In this exemplary embodiment, the guiding unit 40 comprises two substantially parallel tracks 44A, 44B and the floating vessels 1 are slidably connected to both tracks 44A, 44B by a corresponding traveller 41 (see, for greater detail, FIGS. 35 and 36). This arrangement of two parallel tracks 44A, 44B can also be applied to the other embodiments previously shown.

Moreover, FIG. 32 also serves to illustrate the possibility of having multiple guiding units 40, in this case first and second track 44A, 44B, arranged substantially in parallel, each track 44A, 44B comprising its corresponding floating vessels 1 and other elements of a system according to the present invention, with the aim of increasing the energy density of the area occupied by the system object of the present invention, by having two or more fully operating systems arranged in parallel.

FIGS. 33 and 34 both show a front view of the ninth exemplary embodiment shown in FIG. 32, but with different magnification, so that it can be stated that FIG. 33 is a zoomed out version of FIG. 34. As can be seen, in this ninth exemplary embodiment the floating vessels 1 comprise an elevating structure 72 that holds and maintains the interconnecting cable 70 at a certain height above waterline 100.

Distributed spaced apart along the closed loop path defined by the guiding unit 40, the system comprises a plurality of electricity collection units 71, although a single one could suffice, configured for transferring electricity running through the interconnecting cable 70 to the power line 80 via corresponding auxiliar power lines 81 (see FIG. 34).

In this kind of embodiment, the interconnecting cable 70 moves together with the floating vessels 1 and the collection units 71 remain substantially stationary. In order to remain substantially stationary, said collection units 71 are anchored to the bed 110 of the body of water by its corresponding anchoring unit 73, which in the exemplary embodiment shown, comprises cables. In alternative embodiments, said collection units 71 could be anchored to the bed of the body of water by jackets or similar structures, among other possibilities.

In this ninth exemplary embodiment, the guiding unit 40 and its mooring unit 50 are similar to the ones described in the context of FIGS. 16 to 18.

The collection units 71 can comprise a pantograph or any other suitable mechanism that allows electricity transfer from an electrically conducting moving cable to a stationary point.

FIGS. 35 and 36 are a detail side view and a side view, respectively, of the ninth exemplary embodiment of a system according to the present invention previously shown in FIGS. 32 to 34. Both figures allow to clearly see the guiding unit 40 comprising two parallel tracks 44A, 44B. Although in this exemplary embodiment the floating vessel 1 is connected to both tracks 44A, 44B by corresponding connecting cables 42 departing from a common point, in other embodiments this arrangement can be different, as for example, FIGS. 4 and 5, wherein each connecting cable 42 is operatively connected to each hull 10 of the floating vessel 1.

FIG. 37 shows a front view of a sixth exemplary embodiment of a floating vessel 1 of a system for producing electricity according to the present invention. The floating vessel 1 of this exemplary embodiment comprises two hulls 10 interconnected by a connecting structure 11, each hull comprising a support structure of a corresponding underwater turbine 30. Contrary to the exemplary embodiments previously shown, this floating vessel 1 comprises two auxiliar propelling units 91, that can be used to accelerate the floating vessel 1 until it reaches its nominal advance speed when travelling along the closed path defined by the guiding unit 40, to aid the floating vessel 1 in turning or gibing, or to propel the floating vessel 1 when operates independently from the rest of the system object of the present invention. This may be the case, for example, when the floating vessel 1 is transported from the shipyard or equivalent to the system or to move the floating vessel 1 to a port, shipyard, etc. if necessary. When the floating vessel 1 sails independently, the underwater turbines are preferably raised to its resting position in order to reduce the hydrodynamic drag of the floating vessel 1. In order to increase the manoeuvrability of the floating vessel 1, its at least one hydrofoil 20 can be used as a rudder. In embodiments wherein the hydrofoil comprises two or more hydrofoil segments 20A, 20B, 20C, one or more segments can remain stationary, and one or more segments can oscillate to direct the floating vessel 1. If the hydrofoil 20 comprises a single segment, the whole hydrofoil 20 can be oriented so as to act as a rudder.

Moreover, this is also a safety measure as in case of breakage of the connection cables 42, or equivalent, of the floating vessel 1 to the guiding unit 40, said auxiliar propelling units 91 could be used to direct the floating vessel to a safe location. This could be done autonomously or directed by a responsible technician.

FIGS. 38 and 39 show a partial front view and a section view, respectively, of a tenth exemplary embodiment of a system for producing electricity from a fluid stream in a body of water according to the present invention. In this exemplary embodiment, in part of the closed looped path defined by the guiding unit 40 the floating vessels 1 float on the surface of the body of water and in part of the closed looped path defined by the guiding unit 40 the floating vessels 1 float under waterline 100, i.e. the floating vessels 1 are submerged below waterline 100. This is obtained simply by modifying the depth of the guiding unit 40. Such configuration is advantageous for example, if in a certain area there is a lot of marine traffic and by submerging the floating vessels 1 any interference of the system with said marine traffic is avoided.

Despite of the above, it is preferred that the floating vessels 1 remain floating on the surface or remain floating below waterline during the whole closed loop path, as this allows to optimize the floating vessel 1 for each environment.

Besides avoiding interference with marine traffic, submerging the system also greatly reduces or eliminates its visual impact.

The energy production at a certain depth is typically reduced, depending on the speed profile of the stream of water, as the fluid stream is typically faster closer to the surface of the body of water. Moreover, the installation and maintenance of a fully submerged system is also more complex than with the floating vessels 1 on the surface. This leads to the preference of embodiments wherein the floating vessels 1 float on the surface of the body of water and the guiding unit 40, and the rest of auxiliar elements of the system, are submerged, although a fully submerged system is also within the scope of the present invention.

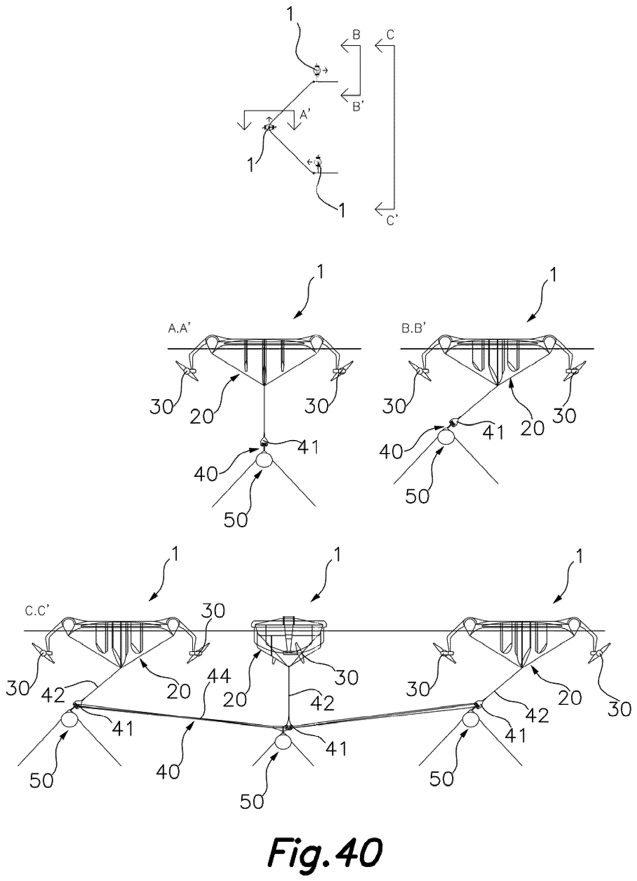

FIG. 40 illustrates the different positions of the floating vessel 1 and its connection cable 42 relative to the guiding unit 40, when travelling along a straight path and along a curved path.

At the longitudinal ends of the paths defined by the guiding units 40 in, for example, the fourth exemplary embodiment shown in FIG. 24, the floating vessels 1 keep advancing following the guiding unit 40, but need to turn its direction. In order to do so, at the longitudinal ends of the loop the floating vessel 1 can tack when the stream of water comes from the bow or gybe when the stream of water comes from the stern.

Section A.A' illustrates how, in the middle of the turn, the guiding unit 40 is lowered in relation to the straight stretches or sections of the closed loop path, so that the connecting cable 42 becomes substantially perpendicular to said guiding unit 40. This reduces the tensions that the connecting cable 42 has to withstand during tack or gybe and the ends of the path.

Section B.B' illustrates how the floating vessel 1 typically advances heeled along the straight sections of the closed loop path.

Section C.C' illustrates the different positions immediately before turning, while in the middle of the turn (Section A.A') and after turning.

Before and after the turn, the one or more hydrofoils 20 of the floating vessel 1 are positioned parallel to the one or more hulls 10 acting as keels, with the one of the segments 20A, 20B, 20C of the hydrofoils 20 acting as rudders. Additionally, the auxiliar propelling unit 91 (see FIG. 37) can aid in both tacking and gybing by providing additional propulsion to the floating vessel.

FIG. 41 illustrates maintenance operations being conducted to an exemplary embodiment of a floating vessel 1 according to the present invention. In this case, the floating vessel 1 is parked in an auxiliar or maintenance track (see, for example, FIGS. 24 to 26) that comprises auxiliar mooring units 75 of the floating vessel 1.

Said auxiliar mooring units 75, in the embodiment shown, comprise a buoy 76 anchored to the bed of the body of water by cables 77 or equivalent, and are attached to the floating vessel 1 by auxiliar cables 78. In the embodiment shown each auxiliar cable 78 is attached to a corresponding hull 10 of the floating vessel 1, although in other embodiments they can be attached to other parts of the floating vessel.

The auxiliar mooring units 75 are a depth that, together with the length of the auxiliar cables 78, causes the connecting cable 42 to no longer be under tension. This allows specialized divers, as shown, or robots to disconnect the connecting cable 42 from the traveller 41 and/or from the floating vessel 1 in order to perform the required maintenance operations. In case the floating vessel 1 is needed to be sent to port or shipyard (see FIG. 37), it is preferred to disconnect the floating vessel 1 from its connecting cable 42, so that it does not drag it together with the traveller 41.

Another benefit of this arrangement of pairs of auxiliar mooring units 75 is that the floating vessel is strongly kept in place by this dual anchoring, thereby increasing the safety of the divers, etc. that perform operations on the floating vessel 1.

In the case shown, the support structures 12 of the underwater turbines 30 are in its resting position so that maintenance operations can be carried out to said turbines 30 above waterline 100 while also maintenance operations are being carried out underwater.

In embodiments wherein two or more floating vessels 1 are electrically interconnected by an electrically conducting cable, said floating vessels are preferably also interconnected by a safety cable, said safety cable having a length shorter than the one of the electrically conducting cable, so that the safety cable prevents breakage of the electrically conducting cable as it prevents said electrically conducting cable to be over stretched in case the distance between the floating vessels 1 increases. The safe cable does not allow the distance between consecutive floating vessels to exceed a predetermined threshold.

The at least one power line 80 for transferring the electricity generated by the system to an external electrical network or consumer can be located lying on the bed of the body of water, floating at a certain depth in the body of water, buried in the bed of the body of water and even floating on the surface of the body of water, although this latter option is the one less preferred as it could interfere with marine traffic.

Although in the embodiments shown the floating vessels 1 comprise horizontal and/or vertical axis underwater turbines 30, in other embodiments the at least one underwater turbine 30 of the floating vessels 1 may be of different type, for example, a biomimetic or membrane tidal turbine.

Unless otherwise provided, features described in relation to a certain exemplary embodiment are also applicable to other embodiments of the present invention and can be freely combined unless otherwise explicitly stated.

Any of the subject matter disclosed above is subject to be subsequently prosecuted in a divisional application.

## Claims

1. System for producing electricity from a fluid stream in a body of water comprising:
- at least one guiding unit (40) defining a closed loop path;
- a plurality of floating vessels (1) connected to the at least one guiding unit (40) and arranged in a spaced apart configuration, each floating vessel (1) comprising:
∘ at least one hull (10);
∘ at least one hydrofoil (20) for propelling the floating vessel (1) along the at least one guiding unit (40); and
∘ at least one underwater turbine (30) operatively connected to at least one electrical generator for producing electric energy;
**characterized in that** each floating vessel (1) is slidably connected to the at least one guiding unit (40) and is electrically connected to at least one power line (80) for transmitting the electric energy produced by its at least one electrical generator to an external electrical network or to an external consumer.

2. System, according to claim 1, wherein the system further comprises one or more travellers (41) slidably connected to the at least one guiding unit (40), each traveller (41) being operatively connected to at least one floating vessel (1).

3. System, according to claim 2, wherein the at least one guiding unit (40) comprises a first track (44A).

4. System, according to claim 3, wherein the system further comprises a second track (44B) diverging from the first track (44A) at a first location, and a first switch (45A) located at said first location configured to direct the floating vessels (1) at least to the first track (44A) or to the second track (44B).

5. System, according to claim 4, wherein the second track (44B) converges to the first track (44A) at a second location, and the system further comprises a second switch (45B) located at said second location, said second switch (45B) being configured at least to allow or block the return of the floating vessels (1) from the second track (44B) to the first track (44A).

6. System, according to any one of claims 3 to 5, wherein at least one of the tracks (44A, 44B, 44C) comprises at least two guide elements (46) arranged parallel to one another, and each traveller (41) comprises at least two rollers (47), each roller (47) being configured to roll along a corresponding guide element (46).

7. System, according to any one of claims 3 to 6, wherein each traveller (41) is operatively connected to the floating vessel (1) by a connection cable (42) that comprises an electrical cable for transmitting the electric energy generated by the at least one generator of the vessel (1) to at least one electromagnetic emitter (48) comprised in the traveller (41); and wherein at least the first track (44A) comprises a plurality of electromagnetic receivers (49) electrically connected to the at least one power line (80).

8. System, according to claim 7, wherein the at least one electromagnetic emitter (48) comprised in the traveller (41) and the plurality of electromagnetic receivers (49) of at least the first track (44A) are arranged substantially parallel one another, the at least one electromagnetic emitter (48) and the plurality of electromagnetic receivers (49) being spaced apart at a certain distance.

9. System, according to any one of the preceding claims, wherein the at least one hydrofoil (20) of one or more floating vessels (1) is made of at least two parts joined together in an articulated manner by an articulated connection.

10. System, according to any one of the preceding claims, wherein the system further comprises a mooring unit (50) for mooring said at least one guiding unit (40).

11. Method for producing electricity from a fluid stream in a body of water comprising the following steps:
- providing a system according to any one of claims 1 to 10;
- moving the plurality of floating vessels (1) along the at least one guiding unit (40) following a first advance direction;
- generating electric energy with the at least one generator operatively connected to the at least one underwater turbine (30) of each floating vessel (1); and
- transferring the electric energy produced by the at least one generator of each floating vessel (1) to an external electrical network or to an external consumer by the at least one power line (80).

12. Method, according to claim 11, further comprising the step of adjusting the electric energy production based on the needs of the external electrical network or the external electrical consumer.

13. Method, according to claim 11 or 12, further comprising the step of adjusting the angular position of the at least one hydrofoil (20) and/or adjusting the shape of the at least one hydrofoil (20) of one or more floating vessels (1), so that the speed of the corresponding vessel (1) moving along the at least one guiding unit (40) increases or decreases.

14. Method, according to any one of claims 11 to 13, further comprising the steps of:
- moving a floating vessel (1) along a first track (44A); and
- directing the floating vessel (1) to a second track (44B).

15. Method, according to claim 14, further comprising the steps of:
- performing maintenance tasks to said floating vessel (1); and
- returning the floating vessel (1) to the first track (44A).

## Patentansprüche

1. System zum Erzeugen von Elektrizität aus einem Fluidstrom in einer Wassermasse, umfassend:
- mindestens eine Führungseinheit (40), die einen Pfad mit geschlossenem Kreislauf definiert;
- eine Vielzahl von schwimmenden Behältern (1), die mit der mindestens einen Führungseinheit (40) verbunden und in einer beabstandeten Konfiguration angeordnet sind, wobei jeder schwimmende Behälter (1) Folgendes umfasst:
∘ mindestens einen Rumpf (10);
∘ mindestens ein Tragflächenprofil (20) zum Antreiben des schwimmenden Behälters (1) entlang der mindestens einen Führungseinheit (40); und
∘ mindestens eine Unterwasserturbine (30), die betriebsmäßig mit mindestens einem elektrischen Generator verbunden ist, um elektrische Energie zu erzeugen;
**dadurch gekennzeichnet, dass** jeder schwimmende Behälter (1) gleitend mit der mindestens einen Führungseinheit (40) verbunden ist und elektrisch mit mindestens einer Stromleitung (80) zur Übertragung der von seinem mindestens einen elektrischen Generator generierten elektrischen Energie an ein externes elektrisches Netz oder an einen externen Verbraucher verbunden ist.

2. System nach Anspruch 1, wobei das System ferner einen oder mehrere Läufer (41) umfasst, die verschiebbar mit der mindestens einen Führungseinheit (40) verbunden sind, wobei jeder Läufer (41) betriebsmäßig mit mindestens einem schwimmenden Behälter (1) verbunden ist.

3. System nach Anspruch 2, wobei die mindestens eine Führungseinheit (40) eine erste Spur (44A) umfasst.

4. System nach Anspruch 3, wobei das System ferner eine zweite Spur (44B) umfasst, die von der ersten Spur (44A) an einem ersten Standort abzweigt, und einen ersten Schalter (45A), der sich an diesem ersten Standort befindet und dazu konfiguriert ist, die schwimmenden Behälter (1) zumindest auf die erste Spur (44A) oder auf die zweite Spur (44B) zu lenken.

5. System nach Anspruch 4, wobei die zweite Spur (44B) an einem zweiten Standort mit der ersten Spur (44A) zusammenläuft und das System ferner einen zweiten Schalter (45B) umfasst, der sich an diesem zweiten Standort befindet, wobei der zweite Schalter (45B) dazu konfiguriert ist, zumindest die Rückkehr der schwimmenden Behälter (1) von der zweiten Spur (44B) zur ersten Spur (44A) zu ermöglichen oder zu blockieren.

6. System nach einem der Ansprüche 3 bis 5, wobei mindestens eine der Spuren (44A, 44B, 44C) mindestens zwei parallel zueinander angeordnete Führungselemente (46) umfasst und jeder Läufer (41) mindestens zwei Rollen (47) umfasst, wobei jede Rolle (47) dazu konfiguriert ist, entlang eines entsprechenden Führungselements (46) zu rollen.

7. System nach einem der Ansprüche 3 bis 6, wobei jede Spur (41) betriebsmäßig mit dem schwimmenden Behälter (1) durch ein Verbindungskabel (42) verbunden ist, das ein elektrisches Kabel zum Übertragen der von dem mindestens einen Generator des Behälters (1) generierten elektrischen Energie zu mindestens einem elektromagnetischen Sender (48) umfasst, der in der Spur (41) umfasst ist; und wobei mindestens die erste Spur (44A) eine Vielzahl von elektromagnetischen Empfängern (49) umfasst, die elektrisch mit der mindestens einen Stromleitung (80) verbunden sind.

8. System nach Anspruch 7, wobei der mindestens eine elektromagnetische Sender (48), der in dem Läufer (41) umfasst ist, und die Vielzahl von elektromagnetischen Empfängern (49) von mindestens der ersten Spur (44A) im Wesentlichen parallel zueinander angeordnet sind, wobei der mindestens eine elektromagnetische Sender (48) und die Vielzahl von elektromagnetischen Empfängern (49) in einer gewissen Entfernung voneinander beabstandet sind.

9. System nach einem der vorhergehenden Ansprüche, wobei das mindestens eine Tragflächenprofil (20) eines oder mehrerer schwimmender Behälter (1) aus mindestens zwei Teilen besteht, die durch eine Gelenkverbindung gelenkig miteinander verbunden sind.

10. System nach einem der vorhergehenden Ansprüche, wobei das System ferner eine Anlegeeinheit (50) zum Anlegen der mindestens einen Führungseinheit (40) umfasst.

11. Verfahren zum Erzeugen von Elektrizität aus einem Fluidstrom in einer Wassermasse, umfassend die folgenden Schritte:
- Bereitstellen eines System nach einem der Ansprüche 1 bis 10;
- Bewegen der Vielzahl von schwimmenden Behältern (1) entlang der mindestens einen Führungseinheit (40) in einer ersten Vorschubrichtung;
- Generieren elektrischer Energie mit dem mindestens einen Generator, der betriebsmäßig mit der mindestens einen Unterwasserturbine (30) jedes schwimmenden Behälters (1) verbunden ist; und
- Übertragen der von dem mindestens einen Generator jedes schwimmenden Behälters (1) generierten elektrischen Energie an ein externes elektrisches Netz oder an einen externen Verbraucher über die mindestens eine Stromleitung (80).

12. Verfahren nach Anspruch 11, ferner umfassend den Schritt des Anpassens der Erzeugung elektrischer Energie basierend auf den Bedürfnissen des externen elektrischen Netzes oder des externen elektrischen Verbrauchers.

13. Verfahren nach Anspruch 11 oder 12, ferner umfassend den Schritt des Anpassens der Winkelposition des mindestens einen Tragflächenprofils (20) und/oder des Anpassens der Form des mindestens einen Tragflächenprofils (20) eines oder mehrerer schwimmender Behälter (1), sodass die Geschwindigkeit des entsprechenden Behälters (1), der sich entlang der mindestens einen Führungseinheit (40) bewegt, zunimmt oder abnimmt.

14. Verfahren nach einem der Ansprüche 11 bis 13, das ferner die folgenden Schritte umfasst:
- Bewegen eines schwimmenden Behälters (1) entlang einer ersten Spur (44A); und
- Lenken des schwimmenden Behälters (1) auf eine zweite Spur (44B).

15. Verfahren nach Anspruch 14, das ferner die folgenden Schritte umfasst:
- Durchführen von Wartungsarbeiten an dem schwimmenden Behälter (1); und
- Rückführen des schwimmenden Behälters (1) auf die erste Spur (44A).

## Revendications

1. Système de production d'électricité à partir d'un courant de fluide dans un plan d'eau comprenant :
- au moins une unité de guidage (40) définissant une trajectoire en boucle fermée ;
- une pluralité de navires flottants (1) reliés à ladite au moins une unité de guidage (40) et agencés dans une configuration espacée, chaque navire flottant (1) comprenant :
∘ au moins une coque (10) ;
∘ au moins une aile portante (20) destinée à propulser le navire flottant (1) le long de ladite au moins une unité de guidage (40) ; et
∘ au moins une turbine sous-marine (30) reliée de manière fonctionnelle à au moins un générateur électrique pour produire de l'énergie électrique ;
**caractérisé en ce que** chaque navire flottant (1) est relié de manière coulissante à ladite au moins une unité de guidage (40) et est électriquement relié à au moins une ligne d'alimentation (80) pour transmettre l'énergie électrique produite par ledit au moins un générateur électrique à un réseau électrique externe ou à un consommateur externe.

2. Système selon la revendication 1, dans lequel le système comprend en outre un ou plusieurs chariots (41) reliés de manière coulissante à ladite au moins une unité de guidage (40), chaque chariot (41) étant relié de manière fonctionnelle à au moins un navire flottant (1).

3. Système selon la revendication 2, dans lequel ladite au moins une unité de guidage (40) comprend une première voie (44A).

4. Système selon la revendication 3, dans lequel le système comprend en outre une deuxième voie (44B) divergeant de la première voie (44A) en un premier emplacement, et un premier aiguillage (45A) situé audit premier emplacement, configuré pour diriger les navires flottants (1) au moins vers la première voie (44A) ou vers la deuxième voie (44B).

5. Système selon la revendication 4, dans lequel la deuxième voie (44B) converge vers la première voie (44A) en un deuxième emplacement, et le système comprend en outre un deuxième aiguillage (45B) situé audit deuxième emplacement, ledit deuxième aiguillage (45B) étant configuré au moins pour permettre ou bloquer le retour des navires flottants (1) de la deuxième voie (44B) vers la première voie (44A).

6. Système selon l'une quelconque des revendications 3 à 5, dans lequel au moins une des voies (44A, 44B, 44C) comprend au moins deux éléments de guidage (46) disposés parallèlement l'un à l'autre, et chaque chariot (41) comprend au moins deux galets (47), chaque galet (47) étant configuré pour rouler le long d'un élément de guidage (46) correspondant.

7. Système selon l'une quelconque des revendications 3 à 6, dans lequel chaque chariot (41) est relié de manière fonctionnelle au navire flottant (1) par un câble de connexion (42) comprenant un câble électrique pour transmettre l'énergie électrique générée par ledit au moins un générateur du navire (1) à au moins un émetteur électromagnétique (48) compris dans le chariot (41) ; et dans lequel au moins la première voie (44A) comprend une pluralité de récepteurs électromagnétiques (49) reliés électriquement à ladite au moins une ligne d'alimentation (80).

8. Système selon la revendication 7, dans lequel ledit au moins un émetteur électromagnétique (48) compris dans le chariot (41) et la pluralité de récepteurs électromagnétiques (49) d'au moins la première voie (44A) sont disposés sensiblement parallèlement les uns aux autres, ledit au moins un émetteur électromagnétique (48) et ladite pluralité de récepteurs électromagnétiques (49) étant espacés à une certaine distance.

9. Système selon l'une quelconque des revendications précédentes, dans lequel ledit au moins une aile portante (20) d'un ou plusieurs navires flottants (1) est constituée d'au moins deux parties assemblées entre elles de manière articulée par une liaison articulée.

10. Système selon l'une quelconque des revendications précédentes, dans lequel le système comprend en outre une unité d'amarrage (50) destinée à amarrer ladite au moins une unité de guidage (40).

11. Procédé de production d'électricité à partir d'un courant de fluide dans un plan d'eau comprenant les étapes suivantes :
- mise à disposition d'un système selon l'une quelconque des revendications 1 à 10 ;
- déplacement de la pluralité de navires flottants (1) le long de ladite au moins une unité de guidage (40) suivant une première direction d'avancement ;
- génération d'énergie électrique au moyen dudit au moins un générateur relié de manière fonctionnelle à ladite au moins une turbine sous-marine (30) de chaque navire flottant (1) ; et transfert de l'énergie électrique produite par ledit au moins un générateur de chaque navire flottant (1) vers un réseau électrique externe ou vers un consommateur externe au moyen de ladite au moins une ligne d'alimentation (80).

12. Procédé selon la revendication 11, comprenant en outre l'étape consistant à ajuster la production d'énergie électrique en fonction des besoins du réseau électrique externe ou du consommateur électrique externe.

13. Procédé selon la revendication 11 ou 12, comprenant en outre l'étape consistant à ajuster la position angulaire de ladite au moins une aile portante (20) et/ou à ajuster la forme de ladite au moins une aile portante (20) d'un ou plusieurs navires flottants (1), de manière -que la vitesse du navire correspondant (1) se déplaçant le long de ladite au moins une unité de guidage (40) augmente ou diminue.

14. Procédé selon l'une quelconque des revendications 11 à 13, comprenant en outre les étapes suivantes :
- déplacement d'un navire flottant (1) le long d'une première voie (44A) ; et
- orientation du navire flottant (1) vers une deuxième voie (44B).

15. Procédé selon la revendication 14, comprenant en outre les étapes suivantes :
- réalisation d'opérations de maintenance sur ledit navire flottant (1) ; et
- retour du navire flottant (1) vers la première voie (44A).
